# EUROPEAN PATENT SPECIFICATION

(11) **EP 1 809 778 B1**
(45) Date of publication and mention of the grant of the patent: **08.07.2009**
(21) Application number: 05797276.2
(22) Date of filing: 21.10.2005
(51) Int. Cl.: C22B 3/10

(54) **LEACHING PROCESS IN THE PRESENCE OF HYDROCHLORIC ACID FOR THE RECOVERY OF A VALUE METAL FROM AN ORE**
AUSLAUGUNGSVERFAHREN IN GEGENWART VON SALZSÄURE ZUR GEWINNUNG EINES WERTMETALLS AUS EINEM ERZ
PROCEDE DE LIXIVIATION EN PRESENCE D'ACIDE HYDROCHLORIQUE POUR LA RECUPERATION D'UN METAL DE VALEUR A PARTIR D'UN MINERAI

(30) Priority: 21.10.2004 ZA 200408533; 22.03.2005 ZA 200502363; 26.09.2005 ZA 200507744
(43) Date of publication of application: 25.07.2007
(73) Proprietor: Anglo Operations Limited, Johannesburg 2001 (ZA)
(72) Inventor: SMIT, Jan Tjeerd, 2195 Johannesburg (ZA); STEYL, Johann Du Toit, 2193 Johannesburg (ZA)
(74) Representative: Setna, Rohan P.
(86) International application number: PCT/IB2005/003136
(87) International publication number: WO 2006/043158

(56) References cited:
- WO-A-20/05093107
- US-A- 4 214 901
- US-A- 5 650 057
- US-A1- 2004 200 730
- US-A1- 2004 237 720
- MONHEMIUS A J ED - BURKIN A R: "TREATMENT OF LATERITE ORES OF NICKEL TO PRODUCE FERRONICKEL, MATTE OR PRECIPITATED SULPHIDE" EXTRACTIVE METALLURGY OF NICKEL, CHICHESTER, WILEY & SONS, GB, 1987, pages 51-73, XP009058773

## Description

### BACKGROUND OF THE INVENTION

The invention relates to a chloride brine treatment process which generates or regenerates hydrochloric acid and relates to a process for leaching a metal from an ore in a chloride solution. The process provides an economically and environmentally acceptable hydrometallurgical process route for the recovery of value metals from ores or concentrates.

The use of relatively concentrated chloride brines as a medium for the leaching of base metals has been proposed many times in the past, a recent example being the Outokumpu Hydrocopper process, as described and referred to in various patents, such as WO 2003/35916, WO 2003/89675 and others. It is known that high strength chloride brines allow generally faster and more complete leaching than the common, relatively dilute, sulphate media. However, the recovery of dissolved values from such brines is generally cumbersome, not allowing standard electrowinning technology.

The use of a hydrochloric acid (chloride) medium for the leaching of nickel laterites ores has been a research topic at various institutions over the years, with N.M. Rice of Leeds University (see Rice, 1989) particularly pioneering in this field. Favourable leaching kinetics were achieved on both typical silicate (serpentine) and oxide (limonite) ores, thus illustrating that this system can be utilised to leach valuables, like nickel, from a range of materials in a typical laterite horizon. Of particular interest was the fast (1 hr) kinetics of leaching at higher temperatures, typically higher than 80°C, in 4 molar hydrochloric acid solutions. A conceptual flowsheet was subsequently proposed (Rice and Strong, 1974), utilising a hydrochloric acid leach to solubilise the valuable cobalt and nickel, which are then subsequently removed by solvent extraction and hydrolysis as nickel hydroxide (using magnesia as the neutralising agent), respectively. Impurities, such as iron and magnesium, are the major contributors to the consumption of expensive hydrochloric acid. The iron chloride is removed from solution by solvent extraction and treated in a spray roasting step to form stable hematite and to regenerate the hydrochloric acid for circulation back to the leaching step. Similarly, the magnesium chloride is treated in a spray roasting step to form magnesia (sold as a by-product and/or used as neutralising agent) and to regenerate the hydrochloric acid (recycled back to the leaching step).

It is estimated that about 70% of the world land-based Ni resources are contained in laterite ores. Currently, only about 40% of Ni produced is extracted from laterite ores and it is estimated this figure will increase to about 50% by 2012 (figures from Dalvi *et al*, 2004). There is need for a new processing route to recover Ni and Co from lateritic deposits, at markedly lower operating and especially, capital cost than what existing technologies can offer. Furthermore, looking forward on supply, assuming a Ni demand growth of approximately 4% p.a. (obviously various factors can disturb this figure) the market will require 40 - 45,000 tonnes p.a. of new Ni production to satisfy demand (figures from Dalvi *et al,* 2004). Even when factoring in the addition of new supply from small sulphide deposits, the major greenfield laterite projects (such as the Goro and Ravensthorpe high pressure acid leach projects, new smelters like Koniambo, and new sulphide hydrometallurgical treatment routes such as Voisey's Bay), supply will fall short of consumption.

### Geology and mineralogy

The economics of laterite processing is strongly dependent on grade and composition of the feed ore. Nickel laterite deposits comprise of two main horizons, i.e. limonitic (hydrated iron oxides) material near the surface (low Ni and Mg, high fe) and the lower down, saprolitic (hydrous magnesium silicates) material (high Ni and Mg, and low Fe). These deposits are formed by a weathering process of the parent rock, which in turn, originates from crystallised molten rock in the form of Fe-Mg-Si-O-minerals. The parent rock contains Ni (∼0.2%) and Co, because they can substitute for Fe and Mg (similar valency and ionic radii) in the crystal lattice of these silicates. Primary serpentine minerals, Mg₃(Si₂O₅)(OH)₄, are formed from the parent rock, during a process of serpentinization, under elevated temperature and pressure conditions (in the presence of water, below the earth's surface). This results in a natural upgrading of Ni (<0:5% Ni). Magnetite is also formed as a co-product of this serpentinization alteration process and is, in addition to some parent rock minerals (such as olivine), a major source of Fe during the weathering process. Laterization takes place when the primary serpentine (the proportion which is referred to the degree of serpentinisation) and associated remnants of the parent rock (especially minerals such as olivine) are subjected to prolonged weathering, especially in wet, tropical regions (also referred to as the laterization process), at or close to the earth's surface. The lateritization processes concentrate Ni and Co by factors of 3 to 30 times, compared to the parent rock. The laterization process is dynamic and the depth profile is essentially a snapshot, with the lowermost part representing the most recently altered rock, i.e. the surface water (made acidic by dissolved CO₂ and organic acids) dissolves and leaches Ni, Mg, Si, Fe (as Fe²⁺) and Al (in order of decreasing mobility) as it percolates downwards through the profile. Nearer to the surface, the iron is rapidly oxidised and precipitates as amorphous ferric hydroxide, co-adsorbing Ni (typically 1.5% Ni) and nearly all the Co in its structure:

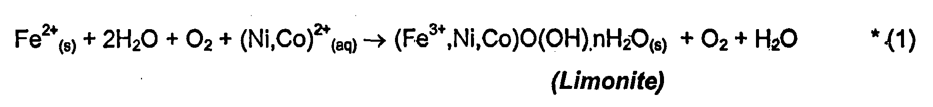

* *This is an unbalanced reaction indicating the complexity* of *the precipitation process in nature. The Fe²⁺ is leached and dissolved under oxidizing conditions from both Fe-oxides, such as magnetite, maghemite etc., and Mg(Fe)-silicates, such* as *olivine and orthopyroxene. The newly formed solids (on the right) most probably also involves the precipitation of ferric hydroxide [Fe(OH)₃]* as *an interim phase.*

With time, the material improves its crystallinity to first form goethite (major constituent of an oxide deposit) and eventually (from the top down) converts to the most stable, natural form, i.e. hematite. Hematite in a wet, oxidizing Ni-laterite environment can't accommodate the Ni and Co in its crystal lattice, and loses its grade to form the upper crust, called ferricrete (this is the layer that is first removed during mining of a laterite deposit). It is important to note that Ni and especially Co are also strongly adsorbed by Mn oxide/hydroxide minerals (mostly formed as veins or surface coatings on other minerals). The Goro deposit in New Caledonia and Moa Bay deposit in Cuba are examples of deposits that consist largely of this type of limonitic zone it their depth profiles.

A particular variety of limonitic deposits is formed when abundant free silica (originating from the parent rock) is reprecipitated, after it has been leached from the Mg-silicate structure (serpentine, olivine etc), as microcrystalline chalcedony quartz. This usually occurs due to Eh and/or pH changes within the lateritic profile. The microcrystalline chalcedony quartz is often partially recrystallized to a more crystalline quartz phase, which occurs as fine to coarse free individual quartz particles (the Ravensthorpe and Jacare siliceous deposits are examples of this type of ore, i.e. amenable to upgrading by physically removing the coarse silica part).

In less severe cases of weathering, e.g. drier or cooler climates, or where groundwater movement is restricted (poor draining), leaching rates are lower and Mg is preferentially leached from the serpentine and olivine crystal structure. This causes a simultaneous upgrading in the other less mobile mineral constituents, e.g. Fe and Si, which leads to the conversion of the primary serpentine and olivine to smectitic clays. Fe²⁺ is also less mobile than Mg²⁺ and thus substitutes for Mg in the crystal structure of the newly formed smectitic clays. These Mg,Fe-clays thus vary in composition from the more Mg-rich sepiolites to the more Fe-rich nontronites. The clay horizon (if present) is usually found intermediately between the limonitic and saprolitic zones. The smectitic clay minerals also fix Ni (as high as 1.5% Ni) within their lattice, where it substitutes for Fe²⁺ and Mg²⁺ ions in the inter-layer positions. Silica in access of that required to form the smectitic clays can also be found as microcrystalline chalcedony quartz nodules in the clay. Murrin Murrin is an example of a deposit that contains a very definite, intermittent smectic zone within its profile.

Whether the smectic clay layer is present or not, the remaining Ni, Mg, Fe and Si are carried down in solution. As the groudwater descends, the pH of the ground water increases due to reactions with the un-weathered bed rock. Close to the laterite-bedrock interface altered Ni-rich (as high as 20% Ni) hydrous Mg silicate minerals (known as garnierites) form. Ni reprecipitates at lower basic pH-levels than Mg, causing a Ni-upgrade in the Mg-silicates, resulting in the formation of these so-called garnierites (Ni-rich hydrated Mg-silicates). Garnierites are more prominent in the tectonically active areas such as New Caledonia, and less prominent in the cratonic terrains, such as Brazil or West Australia. The Ni content of the original parent rock largely determines the Ni-grade of the resulting laterite ores.

Between the bedrock or garnierite layer (if present) and the limonite or clay layer (if present), is a transition zone consisting of highly variable magnesium silicate material, called the saprolite zone, i.e. containing the phyllosilicate group of minerals, originating from the primary serpentine and parent rock. The weathering of un-serpentised parent rock may also result in microcrystalline chalcedony quartz occurring along more permeable geological structures such as shear zones, faults, veins and fractures. With time, Fe, and especially Ni (typically 2-3% Ni), preferentially substitute for Mg to form the secondary "altered" serpentines. For example:

Mg₃(Si₂O₅)(OH)₄₍ₛ₎ + 0.3Ni²⁺ _{(aq)} → (Mg₂₋₇,Ni_{0.3})(Si₂O₅)(OH)₄₍ₛ₎ + 0.3M²⁺_{(aq)} (2)

*Concentrations of dissolved Ni within the percolating groundwater only need to be slightly higher than in the solid phase in order for this reaction* to *move to the right*

The Ni would tend to substitute magnesium preferentially in the weaker bond positions of the serpentine structure, i.e. the OH-bonds of the tetrahedral sites (so-called brucite layer).

Finally, it has to be realised that due to irregularity of the weathering profile (in depth) of the laterite horizon and also due to non-uniform mining, a specific ore sample, e.g. saprolite, may contain variable proportions of other ores, e.g. limonite and/or clay. The resulting ore feed is thus characterized by highly variable mineralogy and associated processing characteristics.

The bulk of the world laterite Ni resource is contained in limonitic-type ores and to a lesser degree by saprolite-type ores (Monhemius, 1987 and Elias, 2002).

### Current Practice

Once again, it should be borne in mind that the economics of any process are more favourable when treating an ore with a higher Ni grade. Beneficiation, when possible, is therefore emphasised as being important. Unfortunately, both limonite and saprolite ores are difficult to beneficiate as the Ni is intimately mixed with goethite and magnesium silicate mineralization, respectively. Distinct possibilities for upgrading by beneficiation exists, however, when coarse barren material is present. Screening of this coarse material would be a possibility if low in Ni content, such as coarse quartz, magnesite (MgCO₃) and magnesium silicate, etc.

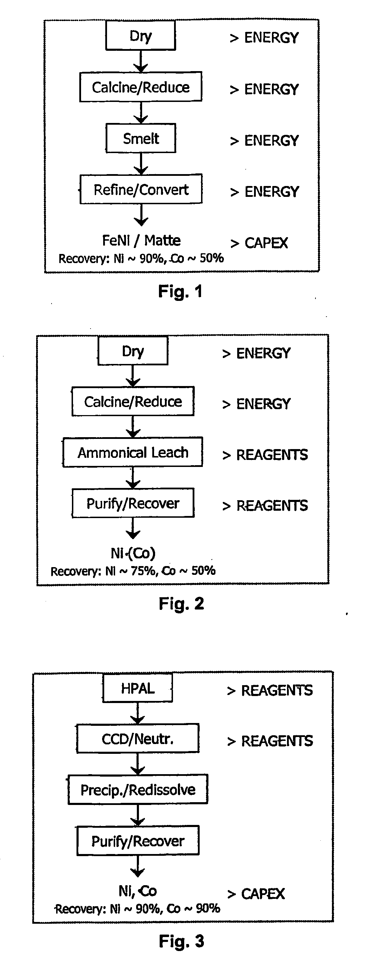

### Smelting Process (Figure 1)

Figure 1 shows a conceptual flowsheet for saprolite treatment via a smelting route. The ore contains 20-50% free water and this is first removed by drying. The ore is then calcined to drive off structural water and the Fe and Ni is then reduced to the metallic state in a furnace with coke or coal. The Mg, Si, etc. follow the slag phase and this allows the removal of liquid molten Ni-Fe alloy. Refining is required to remove the remaining S, C and Si: lime addition forms CaS slag, while oxidation by air is used to convert C to CO gas and Si to the oxide slag. If ferro-nickel is produced, very little Fe is oxidised to the slag phase due to its importance in stainless steel production. The matte production route requires S to be added to the kiln under reducing conditions to react with metallic Ni and (unfortunately) Fe to form sulphides. This material is then melted, with the oxides following the slag phase and the sulphides forming the matte phase. Finally, air is blown through converters to oxidise most of the Fe to the slag phase.

Features:
- slag melting point is sensitive to SiO₂/MgO and FeO
- and ore variability has to be blended out in order to maintain that feed target (mining and blending ore add to expense;
   - the economical cutoff feed grade for low cost power brownfield projects is about 1.7% Ni, and for high cost greenfield projects is approximately 2.1% Ni (Dalvi *et al,* 2004), i.e. the process restraints limit the resource occurrence that can be used as target ore;
   - the smelting process route is plagued by high capital and energy costs and the economics is therefore very sensitive to local power costs;
   - although Ni recovery is good (∼90%), no/little Co by-product credit is possible; firstly because Co levels in saprolite ores are generally low and secondly due to its poor recovery (∼50%), (Dalvi *et al*, 2004).

### Caron Process (Figure 2)

The ore is first dried in a rotary kiln and reductively roasted (fuel oil is commonly used as reductant). The Ni and Co is selectively reduced at approximately 700°C to the metallic state (with about 10% partial reduction of Fe). If the silicate content of the feed is increased (by treating more saprolite ore), re-crystallisation of forsterite (amorphous Mg-silicate) occurs (which is difficult to reduce at 700°C) and thereby locks up the Ni, i.e. it is not amenable to leaching. Similarly, higher reduction temperature and over-reduction results in an increased tendency to form refractory (to ammonia-ammonium carbonate leaching) phases, i.e, it boils down to kinetics vs Ni and Co recovery. After cooling, the alloy is atmospherically leached under oxidising conditions (air) in ammonia-ammonium carbonate solution (pH ∼ 10). The leached Ni (Co) and Fe form very strong ammine complexes in the solution phase. The ferrous ion is oxidised to the ferric state and hydrolyse as a gelatinous ferric hydroxide (Co tends to co-precipitate with the ferric hydroxide and a significant portion cannot be recovered). After liquidsolid separation, some Ni and all of the Co is precipitated as sulphides, using H₂S gas (Co is less soluble than Ni, but the high Ni:Co ratio results in partial Ni precipitation). The (Co-free) Ni solution is then steam stripped to form basic Ni carbonate (solid phase), and CO₂ and ammonia in the gas phase. The CO₂ and ammonia is recovered for reuse by absorption in water to produce the ammonia-ammonium carbonate solution. The Ni carbonate cake is either sold or treated further, by one of a number of "back-end" processes to recover Ni from carbonate salt or solution. The Ni and Co can be recovered by solvent extraction or the basic carbonate salt can be sintered in a rotary kiln to produce NiO (not a good purity product). Alternatively, the cake is re-dissolved in ammonium sulphate solution to form Ni ammonium sulphate, which is then reduced to Ni metal by H₂ gas (see Monhemius, 1987).

Features:
- although the process can tolerate some saprolite (more than the High Pressure Acid Leaching Process, increased amounts of Mg and silicate form increasing amounts of forsterite, i.e. leading to higher Ni losses;
- although the major reagents (ammonia and CO₂) are recycled within the process, significant losses do occur (especially due to Mg leaching, i.e. Mg ammonium carbonate formation); make-up reagents are also required in order to produce a relatively pure product;
- more than 60% of total energy input is consumed by up-front processes (drying of wet ore and reductive roasting), while the back-end reverts back to hydrometallurgical processing, i.e. highly energy inefficient process;
- filtration is poor due to the gelatinous nature of the ferric hydroxide precipitate;
- low value recovery for both the pyrometallurgical (forsterite formation) and hydrometallurgical (co-precipitation of Co and blocking of leach particles due to precipitation of Fe) processes; overall approximately 75% Ni and 50% Co recovery.

No greenfield projects are expected to make use of this technology due to its low valuable metal recoveries and because it is targeted to a feed type with an low grade feed (predominantly limonitic ores), with high accompanied energy and reagent costs (see Dalvi *et al,* 2004).

### HPAL Process (Figure 3)

Metallurgically, the High Pressure Acid Leach (HPAL) Process is relatively simple, starting with the high temperature acid decomposition step at temperatures over 245°C. The discharge slurry is neutralised with lime and decanted counter-currently, followed by impurity removal and Ni and Co precipitation, as sulphides (H₂S) or hydroxides (lime), or direct Ni and Co removal by solvent extraction (Goro flowsheet). Optional further purification and separation involves re-dissolution (if precipitated solids were produced) and purification by solvent extraction or selective precipitation. Finally, metal is recovered via electrowinning or hydrogen reduction, or Ni oxide is produced via pyrohydrolysis (the chloride chemistry being associated with SX or IX, not with the leach).

Features:
- the resource target is larger than for smelting due to the fact that it is a limonitic process route (limonite ore is estimated to represent twice the tonnage of saprolite ore), but the process is very sensitive to the major acid consumers, i.e. Al (clay materials) and especially, Mg (<4%);
- corrosion is high, especially when chlorides are present (saline water). Corrosion resistance is improved when using high grade Ti alloys, but these are expensive;
- capital costs are very high due to the use of pressure equipment and materials of construction;
- reagent costs are very high due to the acid consumers (Mg, Al) and the need to maintain acidic background (due to bisulphate formation), as well as due to neutralisation requirements (lime). Typically, 250 - 400 kg/t acid additions are used, with the lower end corresponding to low Mg limonitic ore;
- scale formation is a problem in autoclaves and results in down-time, especially for the higher Mg and Al feeds.

The study of Dalvi *et al* (2004) suggests that the economics of the HPAL route is very sensitive to the feed grade, i.e. an estimated lower feed grade limit of 1.3% Ni can be applied for greenfield projects, unless offset by lower than average acid consumption (ref. Ambatovy Project in Madagascar) or when situated close to a cheap source of acid (for example, a sulphide smelter operation).

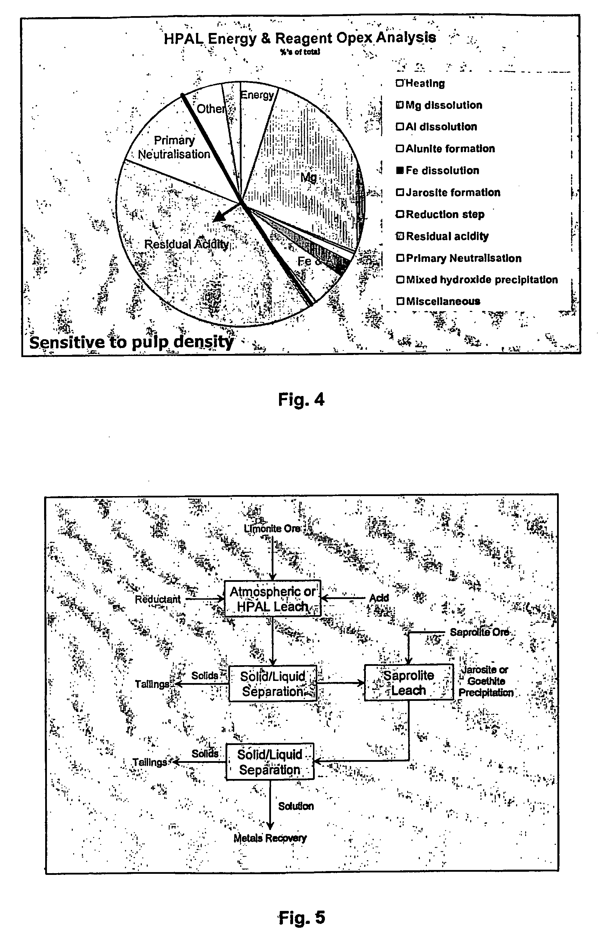

Figure 4 illustrates the inefficiency of the HPAL process in terms of reagent usage. It can be seen that the major culprit in terms of acid consumption is Mg, with the realisation that very little can done about it, except by treating low Mg (limonitic-type) feed ores. In addition, approximately half of the cost is dedicated to maintain the chemical background (to compensate for bisulphate formation, at temperature), while not actually participating in the leaching reactions. The "extra" acid then also needs to be neutralised after pressure leaching. The higher the pulp density, the less the chemical background effect on the cost in absolute terms (cost/lb Ni). However, there is limit on the maximum pulp density due to viscosity limitations.

### Alternative Sulphate-Based Processes

There is a definite tendency in the industry to try and come up with viable atmospheric leaching (ALP) processes, especially because of lower capital requirements, but also with the goal of being able to treat both limonites and saprolites. A limonitic ore would be typically leached at high residual acid concentrations, while a saprolite ore (with a higher neutralisation capability) is then used to neutralise the residual acid and the acid released during Fe hydrolysis. A combination of HPAL and ALP, the so-called Enhanced Pressure Acid Leach (EPAL) Process has also been developed and is currently applied to the Ravensthorpe Project in Western Australia. The ALP and EPAL concepts are illustrated in Figure 5.

The concepts illustrated in Figure 5 were originally patented by AMAX in the 1970s. The AMAX Process also makes provision for a roaster to partially reduce the saprolite ore, i.e. to increase it reactivity for neutralisation, with partial Ni recovery. With the process configuration illustrated in Figure 5, the option can also be exercised to recycle any un-leached Ni in the residue (with the bulk of the Mg removed) back to the HPAL leach (Monhemius, 1987).

Features: Open-circuit, ALP/EPAL Processes:
- the atmospheric leach would be characterised by slow kinetics, although it would be largely compensated for by low capital expenditure, i.e. residence time is relatively cheap (as compared to HPAL) ;
- even if the atmospheric leaching system may be effective in dealing with the removal of Fe (by saprolite neutralisation/hydrolysis), significant losses of acid will still occur due to excessive Mg leaching (however, this cost can be partially compensated for by extra energy from extra sulphur burning, and also by extra Ni revenue);
- the EPAL approach introduces higher energy, and even higher capital costs, compared to HPAL;
- an open-circuit, atmospheric sulphate route would require significant MgSO₄ disposal problems, especially with ever-tightening environmental laws (this is especially true when treating high Mg feed ores).

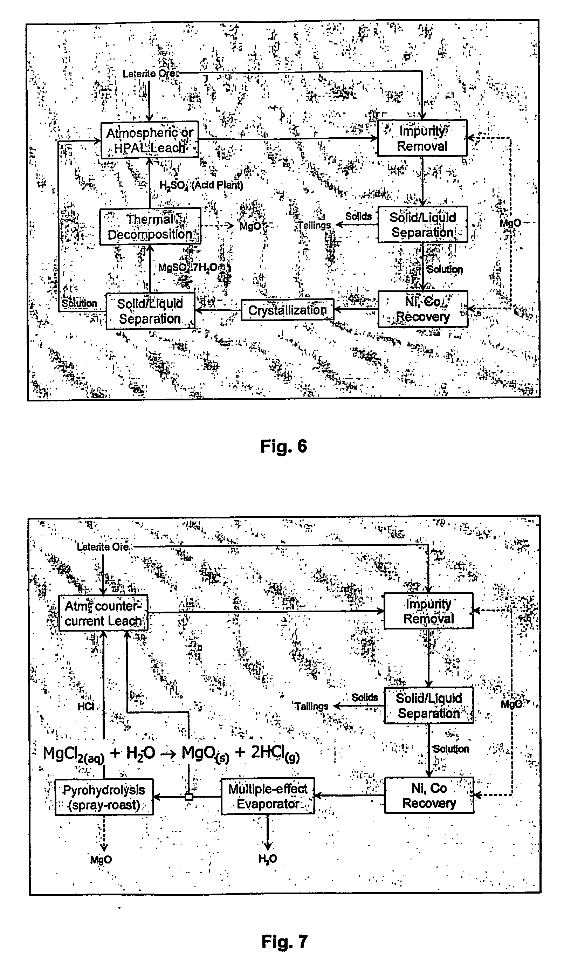

All-in-all, the EPAL route offers the minimum process risks since the HPAL part would ensure high Ni and Co extraction while, at the same time, producing stable Fe residues. The AL part would ensure minimal neutralisation requirements, while additional Ni revenue is harvested. However, very high capital costs and the Mg problem would be of major concern. An open-circuit, complete AL Process in sulphate medium would require very aggressive (high acid) leaching conditions to ensure high Ni and Co extraction. This would, in turn, require high neutralisation requirements by saprolite material which, in turn, would result in high sulphate losses via Mg in solution and probably as jarosite in the residue. High reagent consumptions (unless cheaper sources are available) and environmental requirements would probably make this route unviable. For this reason, alternative processes have been proposed to try and engineer around the Mg issue. One such process, proposed by American Climax Inc. (a predecessor of the AMAX company), used non-evaporative crystallisation in an autoclave at 190-250°C to precipitate the sulphate as the monohydrate. Since this process would require an additional and expensive autoclave, Sulzer in Switzerland came up with the SURAL process (Sulzer Regenerative Acid Leach process), proposing evaporative crystallisation to produce epsomite (MgSO₄.7H₂O). This sulphate salt is then thermally decomposed to generate SO₂ (converted to sulphuric acid in an acid plant and recycled back to HPAL) and the neutralising agent, magnesia (MgO), which is recycled within the process (see Monhemius, 1987). The recently-proposed, Skye Resources proprietary atmospheric leach process is almost identical to the SURAL process, except that the primary leaching step is also atmospheric. In addition, the Skye Process developers claim a less hydrated form of the Mg sulphate salt, i.e. 2 to 3 water of hydration after evaporative crystallisation (ref. Hatch Feasibility Study, 2005). The Sural/Skye process concept is shown in Figure 6:

Features: Closed-circuit, ALP Process, ref. the Skye Process:
- replacement of reagent make-up costs by energy/fuel costs, which can be good or bad, depending on the location;
- the crystallisation of Mg sulphate salt from pure sulphate solution by evaporation requires a significant amount of energy (high evaporation requirement), beyond the amount that an otherwise normal water balance would have required (this becomes increasingly important as the Mg grade of the primary feed ore increases).

### Newly Proposed Processes in Chloride Medium

The Atmospheric Chloride Acid Leach Process is illustrated in Figure 7 (hereafter called the Jaguar process, referring to the Canadian nickel exploration and mine development company Jaguar Nickel Inc., which developed this proprietary process). It consists of an atmospheric leach process in hydrochloric acid solution, containing a high background of MgCl₂. It is claimed that the activity of the proton is dramatically increased with increasing concentration of Mg chloride in the background solution. This claim follows from work conducted by Bates *et al* (1970) and especially, Jansz (1983) on the HCl-MgCl₂-H₂O system. The leach may be 2-stage, where the ore is first leached to bring Ni and Co into solution, and then controlled to reject Fe in the second stage. An added advantage of the hydrolysing Fe from brines, so it is claimed, is that a low water activity in brine solutions tends to enhance dehydration reactions. In principle, hematite can be formed at atmospheric temperatures, where otherwise (pure sulphate system) an autoclave, operating at significantly higher temperature would be required. After recovery of the valuable metals, the solution is evaporated to maintain the water balance and the resulting Mg chloride brine is recycled back to the leach. A bleed stream is pyrohydrolysed (see reaction in Figure 7) to produce magnesia (partially recycled as an internal neutralisation agent) and HCl gas. The HCl is then condensed and recycled to the atmospheric leach vessel.

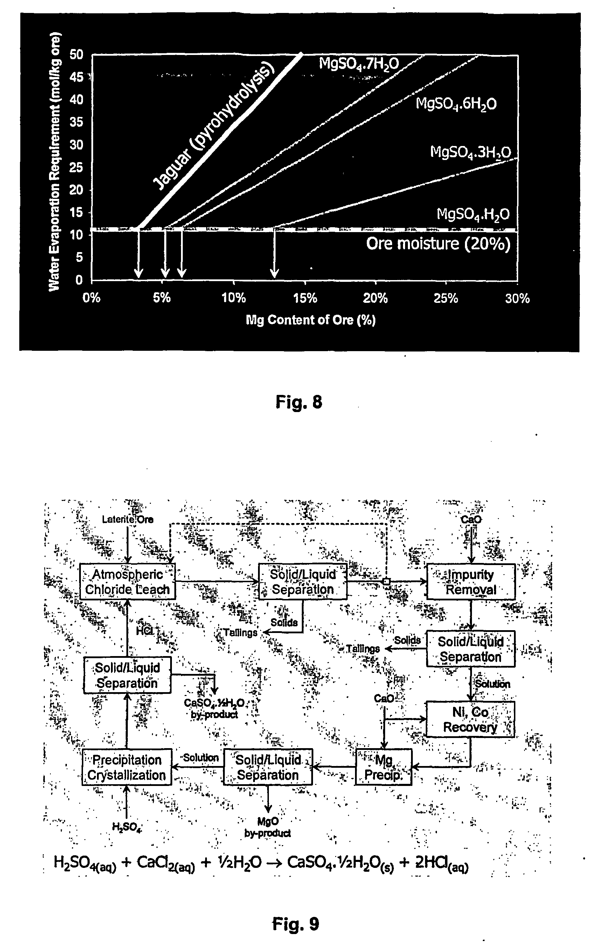

The brine leaching system for leaching laterite ores and the main acid regeneration concept via pyrohydrolysis of Mg chloride was first put forward by Rice and Strong (1974), who proposed to use solvent extraction to remove FeCl₃ from the system, followed by a spray roasting step to form stable hematite and to regenerate the equivalent amount of hydrochloric acid. The Jaguar Process introduces an allegedly more economical approach in dealing with the iron impurity. It operates in a high background salt concentration (MgCl₂ solution), which encourages the hydrolysis of iron at controlled acidity, operated at 80-105°C. However, the economic difficulties with the Jaguar Process become apparent when realising that a significant amount of energy is wasted in the evaporation of excess water from the concentrated magnesium chloride solution before and during pyrohydrolysis, rather than regenerating the reagents. The higher the Mg grade of the material leached, the more water will be carried over to the pyrohydrolysis step in absolute terms, i.e. per kg ore treated (see Figure 8). The end result is that with an increasing Mg feed grade, the Jaguar Process quickly becomes very inefficient with regards to its water balance; so-much-so, that a point is reached where extra water will have to be added to the circuit to absorb the higher Mg into solution, just to be evaporated again during pyrohydrolysis. Similar to the Jaguar Process, a "drawn-in" effect in the water balance, caused by the Mg head grade, although to a lesser degree, is likely also present in the Skye process (in this case, to prevent pre-mature sulphate salt crystallisation in other parts of the circuit), except that the "extra" added water can be relatively efficiently dealt with a multiple-effect evaporator/crystalliser and only the water of hydration of the Mg sulphate salt would impact on the (expensive) high-temperature thermal decomposition step. The lower the hydration state of the Mg sulphate salt produced, the less the impact of the Mg feed grade on the water evaporation load in the high-temperature reagent regeneration step (see Figure 8). The steeper the lines (Figure 8), the less the ability of the extra Ni recovered (from treating higher grade saprolitic ores) to absorb the cost of water evaporation during high-temperature reagent regeneration.

The heat recovery is also poor and complicated for pyrohydrolysis reactors (Steinbach & Baerhold, 2002 and Adham and Lee, 2002). Exotic materials are required, since hydrochloric acid tends to condense in the waste heat boiler during energy exchange. Alternatively, if hydrochloric acid removal is conducted first, the heat value for recovery is lost. Another important factor is that impurities such as Ca and Na chlorides will not pyrohydrolyse and the corresponding equivalent chloride values would have to be replaced with expensive make-up hydrochloric acid or Mg chloride. It is also anticipated that the overall efficiency of the pyrohydrolysis reaction would be significantly less that 100%.

Features: Closed-circuit Process using Pyrohydrolysis ref. the Jaguar Process:
- pyrohydrolysis is viable at relatively low temperature (∼ 500°C) but heat recovery is complicated (high capital expenditure) and relatively poor;
- the Jaguar process would become uneconomical when treating laterite ores with high Mg content, i.e. is essentially a process for treating limonitic ores;
- impurities such as Ca and Na do not pyrohydrolyse and the equivalent chloride values have to be replaced by expensive make-up hydrochloric acid or Mg chloride salt.

The fact that the Jaguar process cannot absorb significant amounts of Mg makes it uncompetitive vs. omnivorous sulphate-based atmospheric processes like the Skye Process. A chloride-based process was proposed very recently (Moyes *et al,* 2005), attempting to eliminate pyrohydrolysis, i.e. to regenerate hydrochloric acid via precipitation of a sulphate salt with sulphuric acid (see chemical reaction in figure 9). The concept behind this revolves around using chemically driven precipitation crystallization with cheap sulphuric acid to regenerate expensive hydrochloric acid, rather than pyrohydrolysis. The Intec process operates via the CaCl₂/SO₄ cycle.

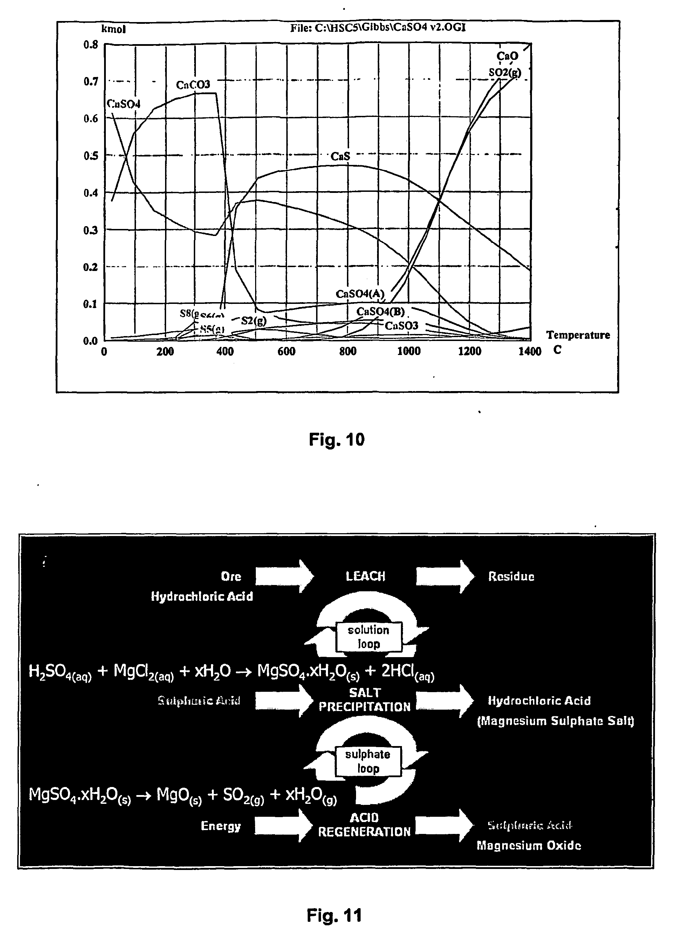

The process follows similar logic compared to the Jaguar process, except that only a bleed stream is subjected to Fe removal and Ni/Co recovery, using lime. The resulting solution is then subjected to Mg precipitation with lime to form magnesia (MgO). All three of these unit operations essentially result in the replacement of the cation chloride, with the equivalent amount of Ca chloride. The total amount of hydrochloric acid consumed in the circuit is then regenerated by adding sulphuric acid, causing the precipitation of a Ca sulphate salt (low solubility). The hydrochloric acid generated is recycled back to the atmospheric leach. The sulphuric acid and lime, in turn, may then be regenerated by thermal decomposition of the Ca sulphate salt. However, a simple thermodynamic model of the thermal decomposition reaction (using HSC Chemistry) reveals some complications (see Figure 10).

Although the sulphuric acid and lime regeneration concept appears sound, the sulphate salt requires a high temperature to thermally decompose, i.e. it requires a high energy input. This may also result in a very refractory, un-reactive type of lime being formed. In addition, intermediate solid phases appear to form during thermal decomposition, which introduces further complications to the process.

Features: Closed-circuit Process using Ca sulphate salt Precipitation (via sulphuric acid addition to regenerate hydrochloric acid), (ref. the Intec Process):
- saleable bassanite (CaSO₄.½H₂O) and magnesia (MgO) by-products are claimed to be formed in the process. However, there are always going to issues around product purity with by-products like these;
- it is unlikely that sulphuric acid and lime can be regenerated economically via thermal decomposition of the Ca sulphate salt. The thermal decomposition reactions proceed through complicated intermediates, the lime product may be refractory and the process would require a high energy input;
- the higher the Mg content of the feed ore, the more sulphuric acid and lime make-up would be required, thus making the process uneconomical for treating saprolite ores.
   The applicant has therefore identified a need for a more efficient and economical leaching process for the recovery of value metals. In particular, the applicant has identified a need for a method of generating or regenerating hydrochloric acid strength in a chloride brine leach solution, without the need for evaporating large quantities of water, as is required when pyrohydrolysis is used. All make-up reagents are required to be relatively cheap, with the option of regenerating the bulk of the make-up requirement within the process.

### SUMMARY OF THE INVENTION

According to a first embodiment of the invention, there is provided a process for leaching a value metal from an ore containing said value metal, the process including the steps of:
leaching the ore in the presence of hydrochloric acid so as to form a soluble metal-chloride salt in a leach solution;
adding sulphuric acid to the leach solution to form a solid metal-sulphate salt, wherein the source of the metal in the metal-sulphate salt is predominantly from the ore;
regenerating hydrochloric acid simultaneously with the precipitation of the solid metal-sulphate salt; and
recovering the solid metal-sulphate salt from the leach solution;
wherein the value metal is selected from the group consisting of Zn, Cu, Ti, Al, Cr, Ni, Co, Mn, Fe, Pb, Na, K, Ca, Ag, platinum group metals and gold.

The metal-sulphate salt may have the formula MeSO₄.yH₂O, where:
Me is a metal; and
y is 0 or greater, such as from 1 to 3, and more particularly 0 or 1.

The ore may be an essentially oxidic or silicaceous base metal ore, such as a zinc oxide ore.

The ore may be a lateritic nickel ore, such as a saprolitic or limonitic ore.

Alternatively, the ore may be a sulphide, titanium or aluminium ore.

The metal-sulphate salt may be precipitated out of the leach solution, or may be recovered from the leach solution by evaporative crystallisation.

The metal in the metal-sulphate salt may be the value metal, and the process may additionally include a step of decomposing the metal-sulphate salt to recover the value metal.

Alternatively, the metal in the metal-sulphate may be a metal of less value than the value metal, such as magnesium.

The metal-sulphate salt may be treated so as to release sulphur dioxide, sulphur trioxide or a mixture thereof.

The value metal may be recovered independently of the metal salt formed by the addition of sulphuric acid.

The recovered hydrochloric acid may be a super-azeotropic acid.

The metal-chloride salt solution may be an alkali solution, and/or similarly the metal-sulphate may be an alkali metal-sulphate salt.

The regenerated hydrochloric acid may be recycled within the leach process. The hydrochloric acid used to leach the ore may be part of a brine solution, such as from about 10% to about 90% saturated magnesium chloride solution, from about 10% to about 90% saturated zinc chloride solution or from about 10% to about 90% saturated other metal chloride solution. More particularly, the brine solution may be an about 25% to about 40% saturated magnesium chloride solution, an about 25% to about 40% saturated zinc chloride solution or an about 25% to about 40% saturated other metal chloride solution. Even more particularly, the brine solution may be an about 30% saturated magnesium chloride solution, an about 30% saturated zinc chloride solution or an about 30% saturated other metal chloride solution.

The metal-sulphate salt may be used to produce a metal oxide. For example, the metal-sulphate salt may be subjected to thermal decomposition to produce a metal oxide and sulphur dioxide, sulphur trioxide or a mixture thereof. The metal oxide may be selected from magnesium oxide, zinc oxide, iron oxide and aluminium oxide. The sulphur dioxide, sulphur trioxide or mixture thereof may be used to produce sulphuric acid, which in turn may be returned to the leach process to regenerate hydrochloric acid.

The value metal may be leached from the ore at a temperature from about room temperature to about the boiling point of the metal-chloride salt leach solution.

One or more value metals, such as cobalt, nickel, platinum group metals, gold, silver and/or copper, may be selectively separated from the solution prior to the formation of the metal-sulphate salt.

Iron and/or other residual impurities resulting from the solubilisation of the ore may be removed from the leach solution by, for example, solvent extraction, followed by pyrohydrolysis; or by hydrolysis.

The sulphuric acid may have a concentration of at least 30%, such as about 98%.

### BRIEF DESCRIPTION OF THE DRAWINGS

- Figure 1:: Conceptual flowsheet for saprolite treatment via the smelting route
- Figure 2:: Conceptual flowsheet for predominantly limonite treatment via the Caron process
- Figure 3:: Conceptual flowsheet for limonite (also smectite) treatment via the HPAL process
- Figure 4:: Energy and reagent Opex analysis of the HPAL process
- Figure 5:: Atmospheric leach (ALP) and HPAL-ALP (EPAL) approaches
- Figure 6:: Sural/Skye concept: Mg sulphate salt crystallisation and primary reagent regeneration
- Figure 7:: Jaguar process concept: primary reagent regeneration via Mg chloride pyrohydrolysis
- Figure 8:: Comparative (hypothetical) water evaporation loads between pyrohydrolysis of Mg chloride solution and thermal composition of crystallised Mg sulphate salts
- Figure 9:: Intec process concept: primary reagent regeneration via Ca sulphate precipitation
- Figure 10:: Thermal decomposition of Ca sulphate salt, ref. HSC phemistry model;
- Figure 11:: Process concept for the invention: reagent regeneration via Mg sulphate precipitation and thermal decomposition
- Figure 12:: Mg sulphate solubility with changing amount of Mg chloride (ref. AspenPlus model)
- Figure 13:: Hydrogen ion activity of a 0.5 mol/kg HCl solution as a function of the Mg chloride concentration and temperature
- Figure 14:: Hydrogen ion molality in: 0 to 1 mol/kg HCl and 2.5 mot/kg MgCl₂, and 0 to 0.5 mol/kg H₂SO₄ and 2.5 mol/kg MgSO₄, respectively, as a function of the temperature
- Figure 15:: Thermal decomposition of Mg sulphate salt, ref. HSC chemistry model
- Figure 16:: Precipitated Mg sulphate salt crystals at different temperatures from brine solutions
- Figure 17:: Conceptual (base-case) flowsheet of the process of the invention
- Figure 18:: Flowsheet 1 of the process of the invention
- Figure 19:: Flowsheet 2 of the process of the invention
- Figure 20:: Nickel extractions obtained from the saprolite tests
- Figure 21:: Cobalt extractions obtained from the saprolite tests
- Figure 22:: Extraction profiles of all the metals,in the saprolite for the high brine test
- Figure 23:: Nickel extractions obtained from the limonite tests
- Figure 24:: Cobalt extractions obtained from the limonite tests
- Figure 25:: Extraction profiles of all the metals in the limonite for the high brine test
- Figure 26:: Nickel extractions obtained from the siliceous limonite tests
- Figure 27:: Cobalt extractions obtained from the siliceous limonite tests
- Figure 28:: Extraction profiles of all the metals in the siliceous liminite for the high brine test
- Figure 29:: Effect of MgCl₂ on nickel extraction
- Figure 30:: SEM photo of the typical crystals formed

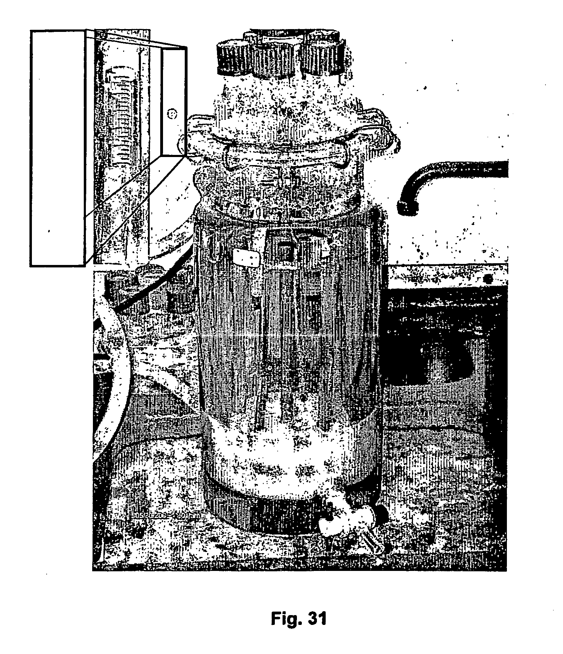

- Figure 31:: Oil heated reactor used with insert of the syringe used to add the reagents
- Figure 32:: Sulphide ore process
- Figure 33:: Chloride and sulphate flow loops in the integrated sulphide ore process
- Figure 34:: Bench-scale non-oxidative atmospheric leach setup
- Figure 35:: Leaching kinetics under non-oxidative leaching conditions in HCl at 90°C (+38-75µm)
- Figure 36:: X-Ray diffraction powder analysis of the crystallisation product

### DETAILED DESCRIPTION OF THE INVENTION

The process of the invention introduces a new generic approach in optimising reagent and energy usage. The primary reagent, i.e. HCl, is regenerated without the need to neutralise post-leach liquors prior to crystallisation or the need to make-up of fresh reagents. This approach becomes more effective in high brine solutions, which add additional benefits of: 1) dehydrated crystallisation product, i.e. lower energy of thermal composition required (regeneration of reagents); 2) dehydrated stable Fe hydrolysis products (such as hematite) at atmospheric temperatures; 3) fast leaching kinetics due to the high proton activity; and 4) leaching and recovery of important by-products (for example Pb, Ag).

According to the invention, a processes as defined in claim 1 is described.

The value metal is leached from a metal-bearing material, which may be either a sulphide or non-sulphide material. For example, the material may be an oxidic base metal ore, such as a zinc oxide ore; a lateritic nickel ore, such as a saprolitic or limonitic ore; a sulphide ore, an aluminium ore or a titanium ore. The metal values first form a soluble metal-chloride, prior to formation of the solid sulphate salt,

The value metal is selected from the group consisting of Zn, Cu, Ti, At, Cr, Ni, Co, Mn, Fe, Pb, Na, K, Ca, platinum group metals and gold.

The metal-chloride salt solution can be an alkali solution, and/or similarly the metal-sulphate can be an alkali metal-sulphate salt.

Sulphuric acid, typically at a concentration of at least 30% (e.g. about 98%), is added to the solution containing the leached value metal so as to form the solid metal sulphate salt or metal sulphite salt which is subsequently recovered. In this way, a relatively inexpensive reagent (sulphuric acid) is used to regenerate a more expensive reagent (hydrochloric acid), resulting in a considerable saving.

The solid metal sulphate salt or metal sulphite salt typically has the formula:

MeSOₓ₋yH2O

where Me is a metal,
x is 3 or 4, and
y is 0 or greater, such as from 0 to 3, and more particularly, 0 or 1.

The solution containing the hydrochloric acid is generally a brine solution (i.e. a chloride salt solution), such as from about 10% to about 90% saturated magnesium chloride solution, from about 10% to about 90% saturated zinc chloride solution or from about 10% to about 90% saturated other metal chloride solution. More particularly, the brine solution may be an about 25% to about 40% saturated magnesium chloride solution, an about 25% to about 40% saturated zinc chloride solution or an about 25% to about 40% saturated other metal chloride solution. Even more particularly, the brine solution may be a 30% saturated magnesium chloride brine, a 30% saturated zinc chloride brine, or other metal or alkali metal chloride. The metal or alkali metal content of the brine solution is typically selected on the basis of the acid consumers present in the leach feed, and the concentration thereof is generally chosen so as to allow a significant differential between its chloride and sulphate salt solubilities.

The metal, which forms the cation of the chloride which forms a major constituent of the brine solution (the leach medium), is preferably selected from the main acid consuming cations present in the ore to be leached.

Metal chloride concentrations are typically selected to:
positively affect the leach process, as described in, for example, the Jaguar process;
allow metal leaching from the ore, without exceeding the solubility of the metal chloride under leach conditions (alternatively, water may be added to prevent chloride losses to the solid phase);
allow easy precipitation of the corresponding sulphate or sulphite - i.e. the metal concentration must be in excess of the sulphate or sulphite solubility;
affect the hydration state of the sulphate or sulphite salt precipitated, such that a lower hydration state is produced than would be possible from a neutral sulphate or sulphite solution; and
not exceed solubility limits in the other unit processes. This may require different operating temperatures for the various unit processes (alternatively, water may be added to specific unit operations in order not to exceed solubility limits).

The initial concentration of the hydrochloric acid is selected so as to leach a high proportion of the value metal while also fulfilling acid consumption demands from the ore. It was found that a final leach pH of 0.5 or lower resulted in value metal extractions of over 80%. However, this is ore-specific, and it will be understood by a person skilled in the art that satisfactory leaching may be achieved at higher final pH values on other materials than those tested herein.

The Sulphuric acid is generally added to the solution in a sufficient quantity so as to result in the strength of the regenerated hydrochloric acid exceeding the azeotrope, as determined by the metal or alkali metal chloride solubility, as compared to the hydrochloric acid strength resulting from its precipitation as a sulphate or sulphite. The brine solution has a background concentration of the metal chloride, to which is added additional strength during leaching. Preferably, the addition of sulphuric acid to this solution does not significantly exceed that amount required for restoring the brine acid strength to its original value. In other words, the background metal chloride concentration should not be removed by the crystallisation of the corresponding sulphate or sulphite salt. Alternatively, the leach liquor may be split into fractions, only one of which is subjected to sulphate or sulphite precipitation, in which case the precipitation may be driven as far as solubilities allow, as the background chloride levels are maintained in the non-treated factions.

The process also includes a crystallisation step to produce metal-sulphate or metal-sulphite crystals having low waters of hydration. As an alternative, evaporative crystallisation (within, or even slightly exceeding normal water balance requirements) may be utilised to alleviate the load of the above-mentioned chemical crystallisation reaction. This alternative Is made possible due to the superimposed effect of the background brine on the degree of salt precipitation upon water evaporation. Furthermore, co-precipitation of Ni within the crystal structure of the magnesium salt is typically most prevalent when performing crystallisation at lower temperatures. This tendency for Ni to co-crystatlise essentially diminishes when conducting chemical crystallisation close to the atmospheric boiling point of the solution.

These salts can be sold directly, can be subjected to thermal decomposition to produce a metal oxide, which can be sold, and sulphur dioxide, trioxide or a mixture thereof, and/or can be re-dissolved in a sulphate medium and thereafter subjected to an electrowinning step.

One or more value metals, such as cobalt, nickel, platinum group metals, gold, silver and/or copper, can be selectively separated from the solutions prior to the formation of the metal-sulphate or sulphite salt.

Iron and/or other residual impurities resulting from the solubilisation of the ore can be partially or completely removed from the leach solution by, for example, solvent extraction followed by pyrohydrolysis, or hydrolysis.

The metal in the metal-sulphate or sulphite salt may be the value metal, in which case the process typically includes a step of decomposing the metal-sulphate salt to recover the value metal.

Alternatively, the metal in the metal-sulphate or sulphite salt may be a metal of less value than the value metal, such as magnesium, and the value metal may be recovered independently of the metal salt formed by the addition of sulphuric acid.

The metal-sulphate or sulphite saft can be treated so as to release sulphur dioxide.

The process is not necessarily limited by temperature ranges, provided that the solubility of the metal sulphate or sulphite is significantly less than the corresponding chloride. Nevertheless, leaching is generally performed at a temperature between room temperature and the boiling point of the solution, and the sulphate or sulphite crystallisation step is generally carried out at a temperature where the referred to solubility differences are maximum.

Magnesium can optionally be removed from the leach solution and replaced with a different metal cation, such as calcium, lead or barium, prior to the addition of sulphur dioxide. After removal of the magnesium, the metal salt that is formed by addition of the sulphur dioxide is an intermediate-sulphite or sulphate, such as calcium sulphate, calcium sulphite, lead sulphate, lead sulphite, barium sulphate or barium sulphite. The intermediate sulphate or sulphite salts can be subjected to thermal decomposition to produce a metal oxide, such as calcium oxide, and sulphur dioxide. The sulphur dioxide can be re-used for the salting out of sulphate or sulphite salts from the leach solution and regenerating hydrochloric acid.

Particular aspects of the process are:
hydrochloric acid strength is regenerated in a base metal chloride brine;
the leach process, working in a chloride medium, is maintained by addition of sulphuric acid;
a metal, such as zinc or magnesium, is recovered from a chloride brine as an only moderately hydrated salt, which can be thermally decomposed, re-dissolved in sulphate medium and electrowon directly from this solution, or sold directly, as the sulphate or sulphite, or after thermal decomposition to oxide.

The present invention is further described in more detail and by way of several examples. Such examples, however, are not to be construed as limiting in any way either the spirit or scope of the invention.

### Non-sulphide ores

A first embodiment of the invention provides a process for leaching magnesium, as well as at least some valuable nickel and cobalt, from non-sulphide ores such as lateritic ores, limonitic oxides and/or siliceous saprolites, in a primarily hydrochloric acid medium. The main leaching agent is hydronium ion in a background of chloride, as dictated by the intrinsic build-up of impurities, particularly magnesium chloride.

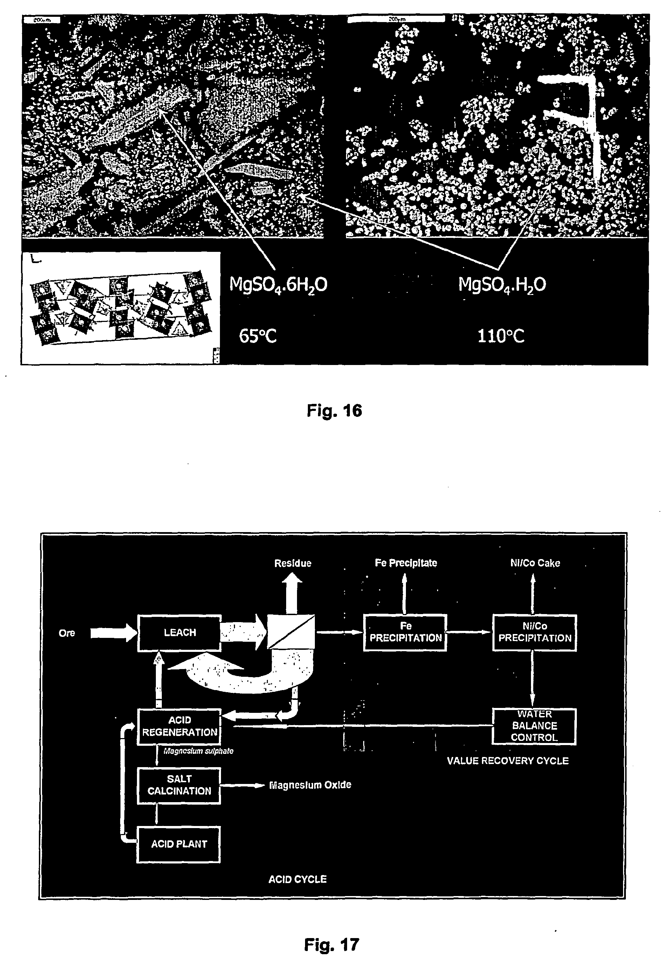

The treatment of non-sulphide materials is discussed in detail hereinafter using a nickel laterite as an example of a non-sulphide material. It will be obvious to a skilled person, however, that other non-sulphide materials can also be treated by the same process, such as zinc silicates, bauxites, and the like. The laterite example is also an example of a case in which the value metal is not the metal used in the chloride brine strength regeneration step. A concept flowsheet of the process is shown in Figure 17.

The regeneration of hydrochloric acid and recovery of magnesium, as described above, is not associated with excessive water removal by evaporation, since the magnesium is first recovered by precipitation and not directly from a magnesium chloride electrolyte solution (as is the case for the Jaguar Process). However, as an alternative, evaporative crystallisation (within, or only slightly exceeding normal water balance requirements) may be utilised to alleviate the load on the chemical crystallisation step. This alternative is made possible due to the superimposed effect of the background brine on the degree of salt precipitation upon water evaporation.

The acid strength of the spent magnesium chloride brine is restored by the addition of sulphuric acid, through which a low-hydration state sulphate or sulphite of magnesium is precipitated, while generating hydrochloric acid in solution.

The laterite leach residue may be treated in a subsequent leach step to maximise nickel and cobalt extractions.

For the sulphate, the experimental data of Linke and Seidell (1965) shows that kieserite (the magnesium sulphate monohydrate) is the preferred crystallisation product at higher temperature (∼100°C), which further minimises the energy required for calcination to form magnesia (which may be used partly as a recycled neutralising agent) and sulphur dioxide. The simplified reaction may be written as follows:

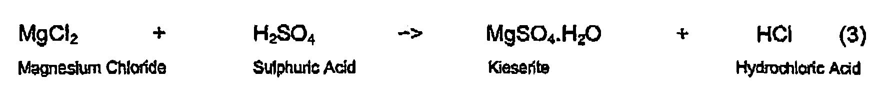

A crystalline product with a content of less than 0.01% total chloride was produced in this manner. The co-crystallisation of Ni into the crystal structure of kieserite was found to be minimised when executing the above reaction dose to the atmospheric boiling point of the solution (or even at higher temperature by applying pressure). It is thus envisaged that it will be possible, using this process, to generate high purity magnesia for sale and/or for use as a neutralising agent. Alternatively, if nickel loss is found to be unacceptable, the nickel may be removed prior to crystallisation by chemical means, for example, ion-exchange, solvent extraction, cementation, precipitation, etc. In addition, relatively expensive hydrochloric acid is regenerated, using sulphuric acid or sulphur dioxide, which are relatively cheap and readily available reagents.

The ferric-ferrous couple in the brine system appears to play a particularly important role in the direct utilisation of sulphur dioxide (not in accordance with the present invention) to precipitate the sulphate or sulphite salt. Without the presence of ferric ion, the capacity of the solution to absorb sulphur dioxide may be found to be very low in solutions with a high brine background and is therefore not efficiently absorbed in the system. However, the presence of ferric ions allows the direct absorption of the gas into the solution due to the reduction reaction of ferric to ferrous ion This reaction appears to be accompanied by changes in solution which, in turn, results in the preferential spatting out of the magnesium sulphate or sulphite salt.

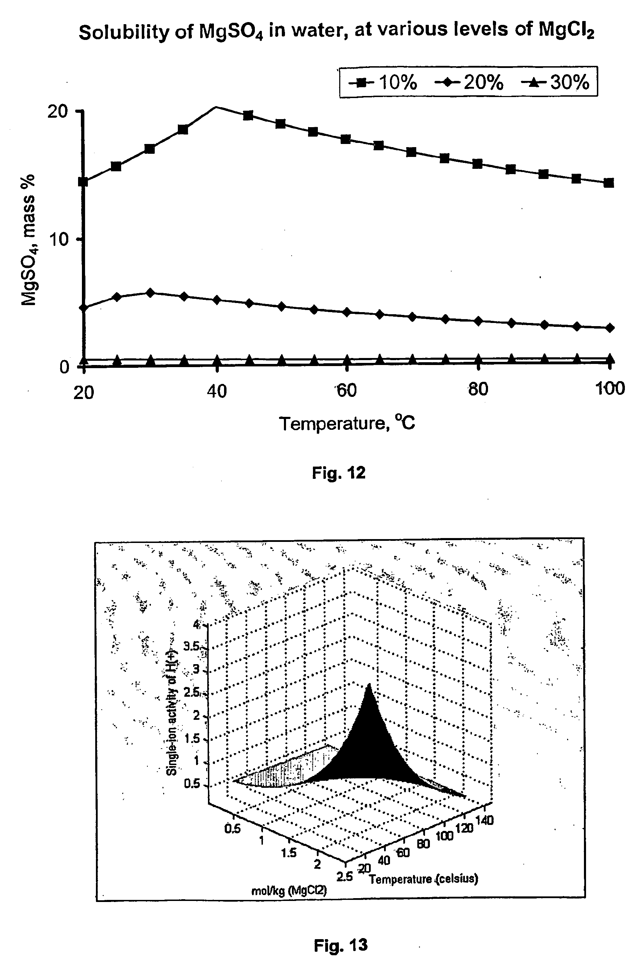

The process of the invention described herein is illustrated in Figure 11 and revolves around the lower solubility of Mg sulphate salt in solution with an increased amount of Mg chloride in the background. An introduction of sulphuric acid into a pregnant leach solution (PLS) would therefore result in the precipitation of the sulphate salt while simultaneously regenerating hydrochloric acid for recycling back to the atmospheric leaching step. Figure 12 presents the predicted change in Mg sulphate solubility with an increase in the chloride background, using commercially available process simulation software known as AspenPlus.

The precipitated Mg sulphate salt, in turn, is thermally decomposed to form magnesia (for internal use as a neutralising agent) and sulphur dioxide gas. The sulphur dioxide gas is converted into sulphuric acid in an acid plant and recycled back to the chemically driven sulphate precipitation step.

Besides temperature and water movement, brine concentration is an important variable in the integration of the flowsheet In contrast, a sulphate-based process, like the Skye process, only has temperature and water movement available as degrees of freedom This would result in the need to add higher amounts of water to prevent undesired crystallisation in the circuit, and this, in turn, would necessitate the removal of higher amounts of water (per kg ore treated) in order to achieve the desired level of evaporative crystallisation. This "drawn-in" effect of water would become increasingly more important as the Mg feed grade of the ore is increased. In contrast, the current invention makes use of a chemical crystallisation step, rather than an evaporative process, thus decoupling the water balance from variability in the Mg content of the feed ore. Also, because of the high brine background in the current process, there is a superimposed effect at work during water evaporation, as required strictly by water balance considerations, allowing still more Mg sulphate precipitation. This would compensate for inefficiency during chemical precipitation (due to unwanted solubility behaviour) without a dramatic increase (beyond the normal water balance) in the steam-supplied energy requirement. The mixed chloride-sulphate electrolyte system therefore adds a higher degree of process flexibility as compared to a pure, closed-circuit, sulphate-based process like the Skye Process.

The process suppresses the sulphate solubility in the circuit by maintaining a high chloride background in the circuit. At the same time, the high chloride background ensures a high activity of the proton and low water activity. Figure 13 presents a surface plot of the proton activity as a function of the temperature and Mg chloride concentration.

The model was specifically developed with the view to characterize the single ion activity of H⁺ in the HCl-MgCl₂-H₂O electrolyte system. Figure 13 illustrates how the single ion activity of H⁺ (which is an important parameter, although not the only one, that would determine how quickly the laterite is broken down to release the Ni) is improved with the addition of a background salt like MgCl₂. At 65°C and 1 M HCl, a tenfold increase is realised. Unfortunately, the effect is dramatically reduced as the temperature is increased. There are therefore two opposing effects: one would like to leach at a lower temperature in order to achieve a high H⁺ activity, but on the other hand, one would like to leach at a higher temperature to overcome activation energy barriers at the solid liquid interface. Nevertheless, even when leaching at, say, 85°C, one can achieve almost double the H⁺ activity compared to its value in the pure HCl-H₂O system. This is especially important, since the same "aggressiveness" of the proton cannot be realised in the pure sulphate system.

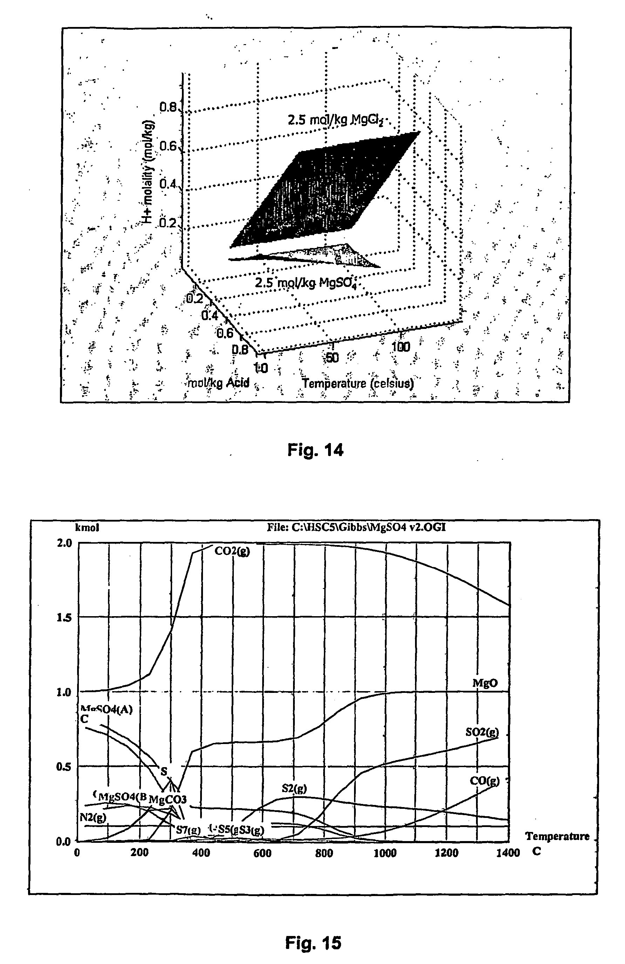

Figure 14 represents a comparison of the two systems and clearly illustrates that the hydrochloric acid - Mg chloride electrolyte would result in a dramatically higher proton concentration compared to an equivalent formal concentration of sulphuric acid in a Mg - sulphate system. The primary reason for this effect can be found in the speciation between the different ions in the electrolyte: the H⁺ - Cl⁻ is weak, while the H⁺ - SO₄²⁻ bond is strong and "captures" most of the proton to form the bisulphate complex, HSO₄⁻. This tendency to form the bisulphate ion is what makes sulphuric acid relatively weaker, especially at higher Mg sulphate concentrations and temperatures.

The process of the invention is particularly suited to deal with impurities such as Na and Ca, unlike a pure chloride-based process, for example, the Jaguar Process. There should be enough sulphate present in the process of the present invention to form Na-Jarosite, which would regenerate its chloride equivalent as follows:

6FeCl_{3(aq)} + 4MgSO_{4(aq)} + 2NaCl_{(aq)} + 12H₂O → Na₂Fe₆(SO₄)₄(OH)₁₂₍ₛ₎ + 4MgCl_{2(aq)} + 12HCl_{(aq)} (4)

In fact, it is preferred that enough sulphate will be present to be able to exploit the above reaction to replace the total lost chloride from the circuit If need be, a small amount of Na chloride could be added to the circuit to ensure enough Na is circulated to the Fe removal step. Any Ca chloride in solution should precipitate to form insoluble Ca sulphate when adding sulphuric acid in the chemical crystallisation step. Although the Ca sulphate salt would not decompose with the accompanied Mg sulphate salt, the difference could be made up by burning an equivalent amount of elemental sulphur. Thus, in addition to efficiently dealing with the main impurities in the process circuit, losses of chloride and sulphate can be compensated for by adding cheap reagents, such as Na chloride and elemental sulphur, respectively. In terms of other impurities, Mn can be easily dealt with because there are more than enough SO₂ available (for SO₂/O₂ oxidation to MnO₂), without the need to bleed. From an environmental and economic point of view, it is important to have no solution bleed from the circuit.

In connection with the calcining of the precipitated magnesium product, an ideal product for decomposition in a fluidizing-bed reactor (900 - 1200°C) would require 1.5 - 4 moles of water per mole magnesium. This practice is disclosed in U.S. Patent No. 4,096,235. The partial re-hydration of the monohydrate (to produce an optimised hydrate for thermal decomposition) may be easily achieved by controlling the contact time of the crystallised precipitation product with suitable water based liquor. The technology of regenerating sulphuric acid from the sulphur dioxide, produced in the calcining of the sulphate/sulphite salt, is well established and may provide a means of recycling sulphuric acid, if warranted economically.

A major advantage of using a magnesium sulphate/sulphite salt for decomposition to magnesia is that significantly less energy (compared to pyrohydrolysis of a magnesium chloride solution, as suggested by the Jaguar process) is associated with the removal of water, i.e. only waters of hydration. A very high quality magnesia product with commercial value can be produced in this manner.

The thermal decomposition of Mg sulphate salt is relatively straightforward. Figure 15 represents the HSC Chemistry model for the thermal decomposition in the presence of carbon as a reductant. The kinetics of thermal decomposition, even at 800°C, should be very fast since the precipitated Mg sulphate salt tends to be very fine (<10µm). Figure 16 illustrates that precipitation at lower temperature (65°C) results in a mixture of the needle-like hexa-hydrate and very fine mono-hydrate particles. Precipitation from brine solutions at higher temperature (110°C) exclusively forms the mono-hydrate, kieserite (MgSO₄.H₂O). Thus, the energy of thermal decomposition is expected to be lower than for the Skye process, where at least two waters of hydration are present in the precipitated salt. Any Mg chloride sticking to the small particles should pyrohydrolyse to form HCl-gas, which can be recycled. A typical composition of the precipitated sulphate salt has been experimentally found to be: 17.1% Mg, <0.05% Fe, 0.1% Ni, <0.05% Co, 2% Cl, with the balance sulphate and water. The Ni content of the precipitated salt is a function of temperature, the content increasing with lower temperatures of crystallisation.

Potentially cheaper fuel sources could be used, such as heavy fuel oil (HFO) and especially low grade coal. Any sulphur in the coal should oxidise to form SO₂ and therefore reduce the overall, elemental sulphur make-up requirement.

As mentioned above, a major advantage of working in the chloride system is its tendency to dehydrate solid phases in equilibrium with the brine solution. Besides the fact that kieserite (mono-hydrate) or even the anhydrate salt can be formed during crystallisation, hematite may be formed during Fe hydrolysis under atmospheric conditions. It is not only the referable hydrolysis product from an environmental point of view, but is known to show improved settling and filtration characteristics, compared to the more gelatinous or hydrated precipitates in the pure sulphate system. This would also result in a solid phase cake with low moisture content and thus minimise valuable losses from the circuit.

Another important factor is the tendency of Ni and Co to co-absorb within the crystal structure of ferric hydroxide and goethite, whereas (just as is found in nature) hematite shows a very low tendency to co-absorb these species. The preferential precipitation of hematite from brine solution is especially achievable by controlled super-saturation precipitation and the introduction of hematite seed material during Fe hydrolysis (see Riveros and Dutrizac, 1997).

The base-case conceptual flowsheet of the process of the invention is illustrated in Figure 17. The recycle around the atmospheric vessel allows the hydrochloric acid maximum residence time to react and minimises the neutralisation requirements (internal recycle load of Mg per ore treated) of the circuit. Only a bleed stream is neutralised to hydrolyse the Fe and then to recover Ni and Co via hydroxide precipitation. A single evaporation step follows after neutralisation to maintain the water balance. Chemical crystallisation, on a split stream of the main recycle, regenerates the equivalent hydrochloric acid consumed plus losses from the circuit. The precipitated sulphate salt is calcined to produce SO₂ gas and magnesia. The SO₂ gas is converted to sulphuric acid in an acid plant and recycled to the crystalliser, while a portion of the magnesia is recycled to satisfy the internal neutralisation requirements. The excess magnesia may be sold.

An important aspect of the present process is its relative insensitivity towards the Mg content of the feed ore. This follows directly from Figure 8. If the mono-hydrate cake is produced, there is little/no evaporation associated with the regeneration step (thermal decomposition of Mg sulphate salt). This allows for the treatment of high-grade saprolite ores which adds significant benefit on the operating cost in absolute terms due to its high Ni metal value. The following list illustrates that all the target performance criteria can be met in principle.

### Target Performance Criteria

- Reduced capital requirements compared to HPAL and Smelting ✔;
   - no high pressure hydrometallurgical unit operations required and only mild temperature pyrometallurgical unit operations required;
   - although the chloride medium requires special corrosion precautions, all unit operations are atmospheric in nature;
- Reduced energy requirements compared to Smelting ✔;
   - thermal decomposition of the de/poorly-hydrated Mg sulphate salt is achievable below 800°C, if a reductant is added to the system;
   - the waste energy value from the high temperature thermal decomposition step supplies all of the hydrometallurgical circuit heating requirements via a waste heat boiler system;
   - low grade coal containing sulphur may be used as reductant and fuel for direct combustion in the thermal decomposition roaster;
- Reduced reagent requirements compared to HPAL ✔;
   - thermal decomposition of the Mg sulphate salt results in the regeneration of sulphate (via an acid plant) and the neutralising agent (magnesia);
   - sulphur make-up requirements are limited to normal losses from the closed circuit and can be compensated for by burning additional (inexpensive) sulphur,
   - chloride make-up requirements are limited to normal losses from the closed circuit and can be replaced by an inexpensive chloride salt, such as NaCl;
   - impurities such as Na and Ca can be dealt with via the removal of the sulphate salt (sodium jarosite and Ca-sulphate, respectively), i.e. no bleed stream required;
- Ni and Co recoveries comparable to HPAL ✔;
   - a higher proton activity and therefore a more aggressive leaching system (compared to the ore response under atmospheric pressure in a pure sulphate system);
   - even though the kinetics would be slower compared to HPAL, this can be compensated for by larger atmospheric leaching tanks, i.e. residence time is relatively cheap;
- Liquid/solid separation and residue stability ✔;
   - Fe hydrolysis products precipitated in the presence of chlorides, show superior settling and filtration characteristics;
- Environmental ✔
   - dehydrated Fe hydrolysis products, like hematite (environmentally stable) can be formed under atmospheric/slightly pressurised conditions in the chloride system;
   - Mg-sulphate salt is thermally decomposed to satisfy internal acid and neutralising agent requirements;
   - closed circuit, i.e. no effluent discharge to the environment;
- Increased Ni revenue from a widened ore target ✔;
   - insensitivity to the Mg content of the feed ore allows the co-processing of limonitic and saprolite ores, with a larger associated Ni revenue target.

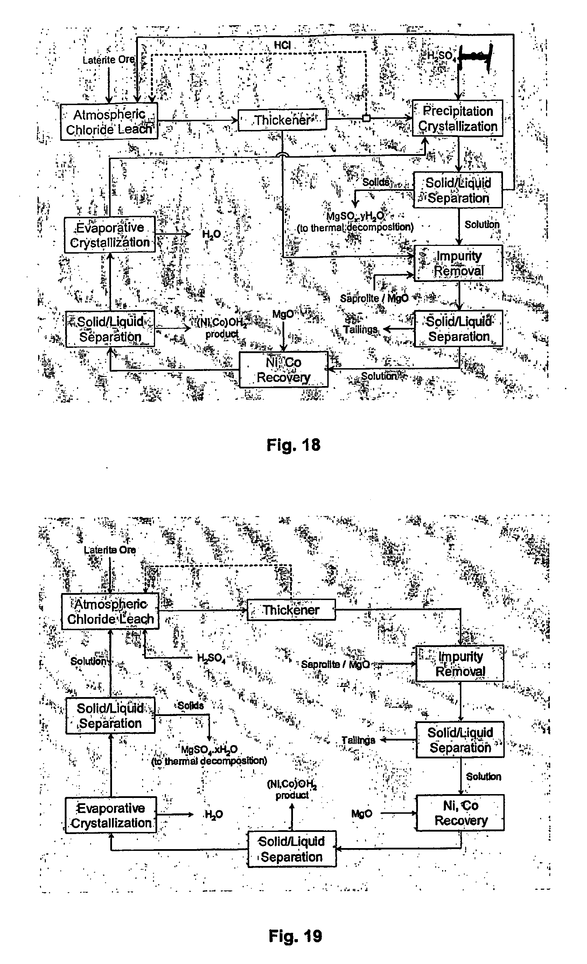

Two conceptual flowsheets prepared by mass/energy balancing are shown in Figures 18 and 19. Flowsheet 1 (Figure 18) was used as the base-case flowsheet The brine background of the invention is exploited to suppress Mg-sulphate solubility. Evaporative crystallisation, not exceeding normal water balance requirements, is utilised to alleviate the load on the chemical precipitation step, i.e. to compensate for inefficiency in the chemical crystallisation step due to bisulphate formation. Flowsheet 1 (Figure 18) effectively decouples the water evaporation requirement from the Mg variability in the feed ore. Figure 19 represents an alternative flowsheet, assuming chemical crystallisation would not be possible in a high acid environment due to bisulphate formation. This represents the worst-case scenario in terms of reagent regeneration.

The addition of SO₂ rather than H₂SO₄ to the leach solution is not within the scope of this invention.

### 1. Mineral Response Tests

Lateritic ore samples were tested, using a mineral response testwork procedure. Three ore samples were selected for further testing to investigate the effects of a high brine background and sulphur dioxide. The tests were conducted at high solids concentration (30%) and acid additions (sulphuric = 2018 kg/t and hydrochloric = 1500 kg/t; both 41.2 kg H⁺/t).

Jacaré Saprolite, Ferruginous and Siliceous ores from Brazil were selected for the testwork. The head grades of the samples are shown in Table 1.

**Table 1: Head grades of samples used**

| **Sample** | **Ni** | **Co** | **Fe** | **Mg** | **Al** | **Si** | **Cr** | **Mn** |
|---|---|---|---|---|---|---|---|---|
| Jacaré Saprolite | 1.60% | 0.07% | 12.81% | 17.43% | 0.61% | 17.06% | 0.72% | 0.24% |
| Jacaré | | | | | | | | |
| | 1.14% | 0.17% | 42.23% | 0.63% | 1.25% | 10.00% | 2.38% | 0.85% |
| Ferruginous | | | | | | | | |
| Jacaré Siliceous | 1.25% | 0.22% | 22.42% | 2.35% | 2.30% | 20.92% | 1.09% | 0.92% |

| | | | | | | | | |
|---|---|---|---|---|---|---|---|---|
| Each sample was subjected to the following set of tests given below: 1. Hydrochloric acid leach (1500 kg/t) 2. Sulphuric acid leach (2018 kg/t) 3. High brine hydrochloric acid leach (1500 kg/t HCl; 2 m MgCl₂) 4. High brine hydrochloric acid leach with SO₂ (1500 kg/t HCl; 2 m MgCl₂; 20 kg/t SO₂) | | | | | | | | |

The tests were conducted in a 2 l glass reactor with an oil jacket circulated from a thermostatically controlled oil bath. All tests were conducted at 85°C, starting with 300g of ore pulped to a 30% slurry (solids/solids+water) in water. The slurry was suspended using a coated steel impeller and a polypropylene baffle insert. The acid addition was subdivided into ten equal additions at one hour intervals. A 40 ml slurry sample was taken at the end of each interval (analysed for the extraction of the metals). Magnesium chloride hexahydrate was added to the initial slurry, while anhydrous magnesium chloride was added with the acid in order to maintain the magnesium chloride levels during the high brine tests. When required, sulphur dioxide addition was controlled using a Bronkhorst mass flowmeter.

### a. Saprolite results

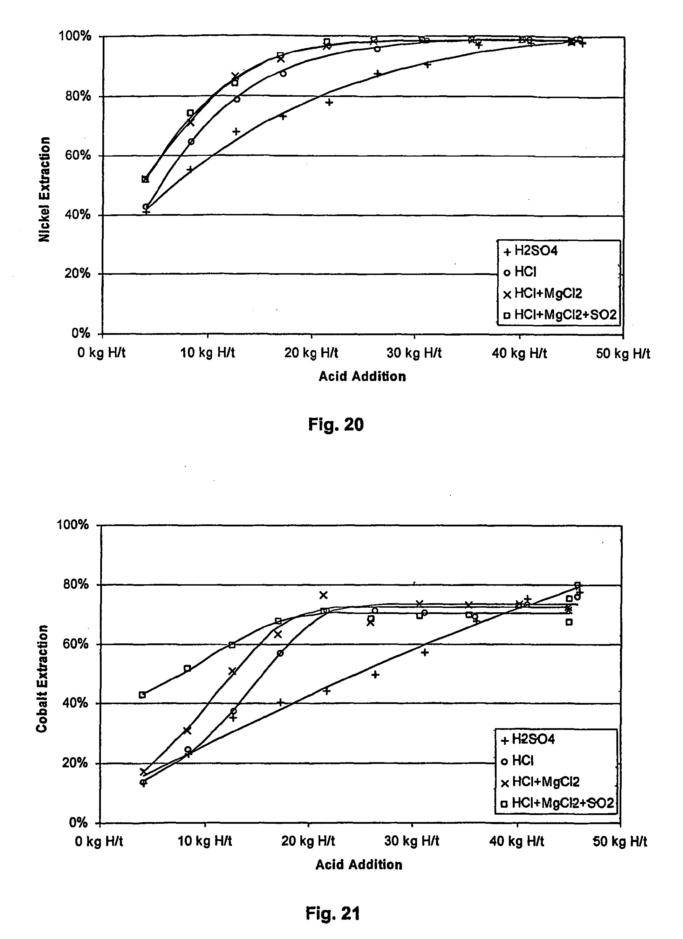

Figures 20 and 21 represent the nickel and cobalt extractions achieved for the saprolite experiments respectively. Higher extractions of both metals in the chloride medium are evident, whether it is the higher acid activity due to the chloride ions or the formation of the bisulphate complexes in the sulphate medium. An improvement in extraction of approximately 10% is observed with the brine background as compared to the pure hydrochloric acid leaches. The addition of sulphur dioxide had no effect on the extraction of nickel while there was an improvement in the cobalt.

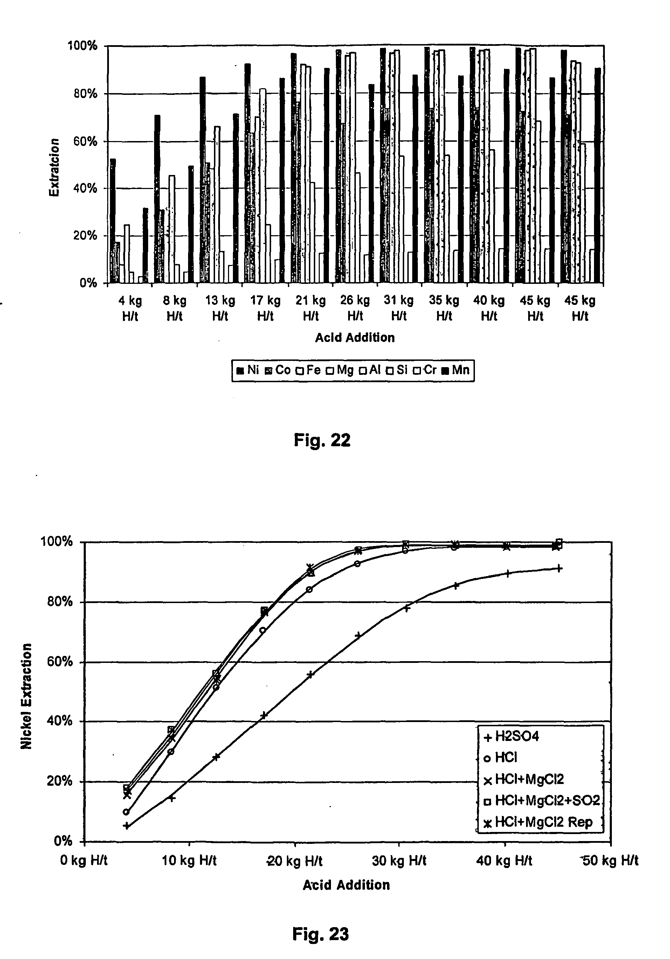

Figure 22 illustrates the extraction profile of all the metals in the high brine test. Nickel is selectively extracted from the saprolite at the low acid additions followed by manganese and then magnesium. The selectivity decreases with increasing acid additions up to 26 kg H⁺/t after which the profile does not change significantly.

### b. Jacaré Ferruginous results

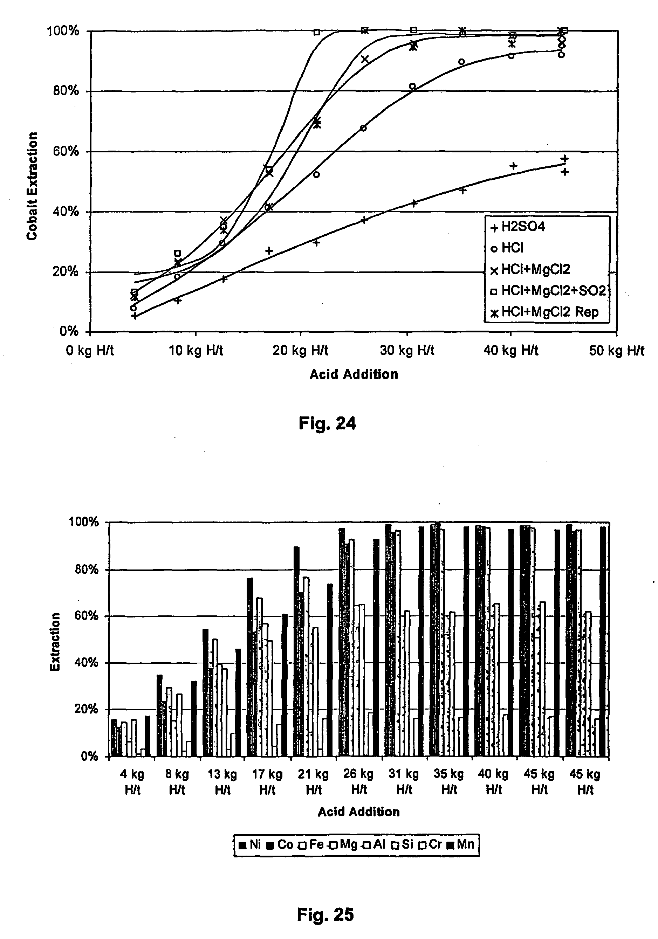

Figures 23 to Figure 25 represent the results of the limonite tests. Analogous trends (ref. saprolite behaviour) are observed for the extraction of nickel. However, the limonites appear to benefit more from the chloride background, with a greater separation between the extraction with hydrochloric and sulphuric acid. A 10% improvement in extraction is again observed for the brine background with no effect of sulphur dioxide. Higher cobalt extractions were obtained with the addition of sulphur dioxide to the brine background. Figure 25 illustrates that a small degree of selectivity was obtained in the high brine background. The extraction profile did not change significantly at acid additions greater than 26 kg H⁺/t.

### c. Jacaré Siliceous Limonite

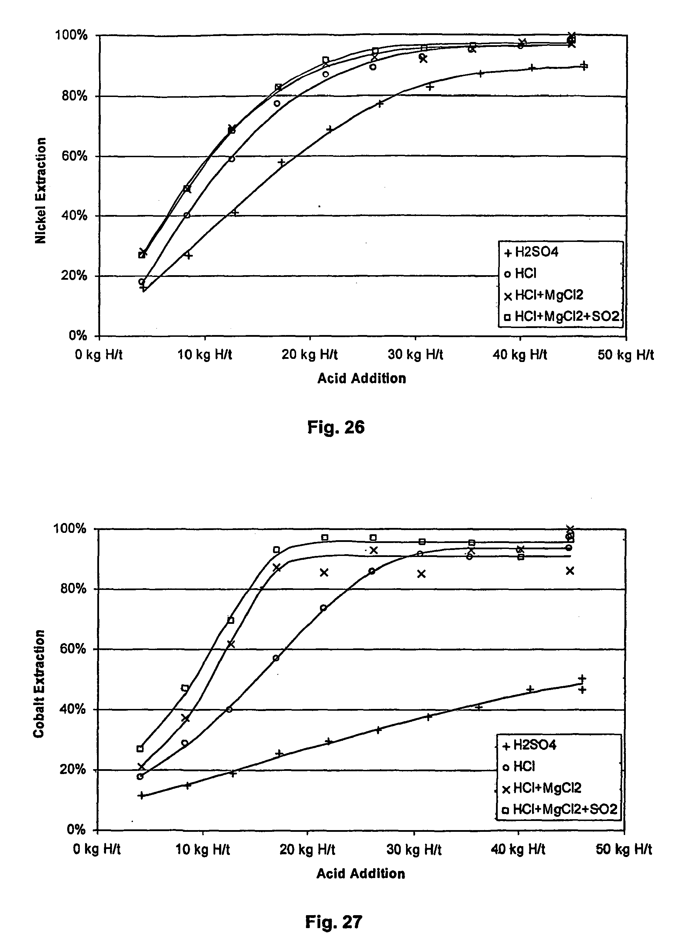

The nickel and cobalt extraction profits are represented in Figures 26 to Figure 28. The trends were similar to those observed for the ferrugineous ore sample.

From the mineral response testwork the following can be concluded:
- A significant improvement in nickel extraction was observed changing from the sulphuric to the hydrochloric to the brine systems. Similar benefits were observed for cobalt.
- Only the extraction of cobalt benefited from the addition of sulphur dioxide.
- The extraction of nickel from Jacaré Siliceous is correlated to the extraction of iron, magnesium and manganese in roughly the same proportions as the nickel is contained the limonite, magnesium-silicate and manganese hydroxide phases, respectively.
- The extraction of cobalt in the Jacaré Siliceous is correlated with the extraction of manganese alone and does not correspond to the proportions of cobalt distributed between the various phases.

### 2. Crystallisation Tests

Little information is available on the solubility behaviour of magnesium salts in acidic chloride-sulphate or chloride-sulphite aqueous systems. This knowledge is needed in order to determine the operating conditions, as well as the integration of the various unit operations. The main parameters are:
- temperature,
- acid concentration,
- chloride concentration, and
- sulphate/sulphite concentration.

The less complicated two-phase sulphate system was selected first, i.e. with no gas phase was present. Starting solutions were prepared at constant magnesium chloride with varying magnesium sulphate concentrations. Sulphuric acid was added at temperature until precipitation was observed. The product solution was analysed for Mg²⁺, Cl⁻, SO₄²⁻ and free acid, from which the ionic product of magnesium and sulphate was calculated, while the solids were analysed for Mg²⁺, Cl⁻ and SO₄²⁻.

### Crystal Characterisation

The integrated flowsheet imposes limitations on the operating conditions of the crystalliser and the characteristics of the produced solids. The following characteristics of the crystals are important and need to be quantified:
- Particle size distribution: A narrow particle size distribution with a sufficiently large mean size is required for fluidisation in air. Alternatively, the product will be thermally decomposed in a rotary kiln.
- Crystal water: As low as possible hydration state is required.
- Liquor inclusions: Loss of the mother liquor need to be kept to a minimum.
- Filterability: The filterability is considered subservient and should improve by meeting the above.

It is accepted that the characteristics of the crystals produced with the batch experiments are not likely to be representative of a production scale continuous reactor.

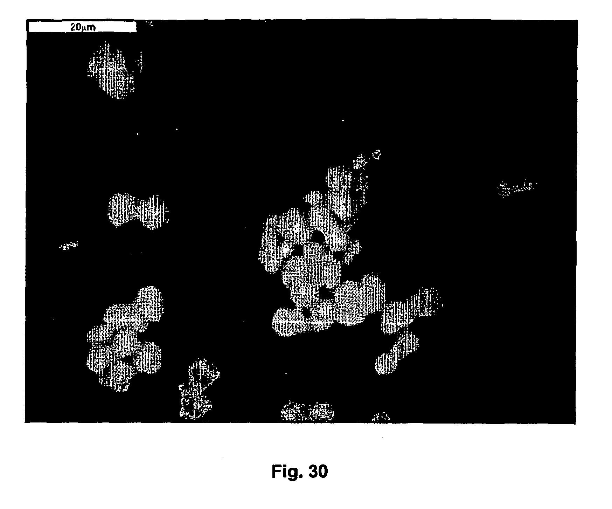

The crystals produced from the batch experiments were typically fine (10 µm particles that tend to agglomerate) as shown in Figure 30. Chemical analysis showed a magnesium to sulphate molar ratio close to one (∼17% Mg + ∼67%SO₄) and a chloride content of less than 2%. The particular crystals in Figure 30 were formed at 110°C by adding concentrated sulphuric acid to a 6 mol/kg MgCl₂ solution. These crystals were too small for single crystal analysis (minimum 50 µm crystals), but chemical analysis and X-ray Diffraction (XRD) powder analysis confirmed the bulk phase to be kieserite (MgSO₄.H₂O).

### 3. Locked-Cycle Tests

Locked cycle tests were used to evaluate the interaction between the leaching and crystallisation, the two key processing steps in the present process. A neutralisation step was also introduced to control the build-up of iron and nickel in the recycled solution. Each cycle consisted of a sequence of leaching, neutralisation and then crystallisation, using the solution from the preceding step. The sequence was to be repeated for a number of cycles in order to approach steady-state.

The difference in the solubility of magnesium sulphate in the leach relative to crystallisation was sufficient to accommodate any additional magnesium entering the system. The only exit point for the magnesium was during crystallisation. The difference in solubility was further enhanced by the different operating temperatures for crystallisation (110°C) and leaching (85°C).

The locked cycle tests were conducted at a solids density of 10% (solids/solids + water) with Jacare Saprolite.

The extraction of Ni exceeded 90% and the hydrochloric acid background was maintained by successive addition of sulphuric acid and removal of Mg sulphate salt via the crystallisation step. The portion of solution removed (bleed) after crystallisation was sufficient to maintain the Fe and Ni concentrations in the primary cycle. After three cycles however, the maintenance of the water balance in the primary cycle became very challenging when conducting small batch-scale experiments. The results during the first three cycles (Table 2) were, however, sufficient to prove that that the primary reagent (hydrochloric acid) could be maintained by adding sulphuric acid to precipitate Mg sulphate salt.

**Table 2: Lock cycle test results**

| **Cycle** | **Leach** | | | **Crystallisation** | | |
|---|---|---|---|---|---|---|
| | Ni Extraction | Mg Extraction | Fe Extraction | Sulphuric Acid Addition | Crystals per Sulphuric Acid | |
| 1 | 96.0% | 95.7% | 92.5% | 1000 kg/t | 1.15 kg/kg | 0.72 mol/mol |
| 2 | 94.5% | 93.2% | 91.9% | 1000 kg/t | 1.51 kg/kg | 0.99 mol/mol |
| 3 | 95.5% | 94.7% | 92.5% | 1000 kg/t | 1.50 kg/kg | 0.99 mol/mol |

| | | | | | | |
|---|---|---|---|---|---|---|
| Ore Saprolite: Fe: 15% Ni: 1.5% Mg: 18% Leach solids density: 10% | | | | | | |

Also noted was the formation of some Mg sulphate crystals during neutralisation to remove Fe from the bleed stream. These crystals were however rapidly re-dissolved and re-introduced to the cycled solution upon washing of the final residue cake with a small amount of water.

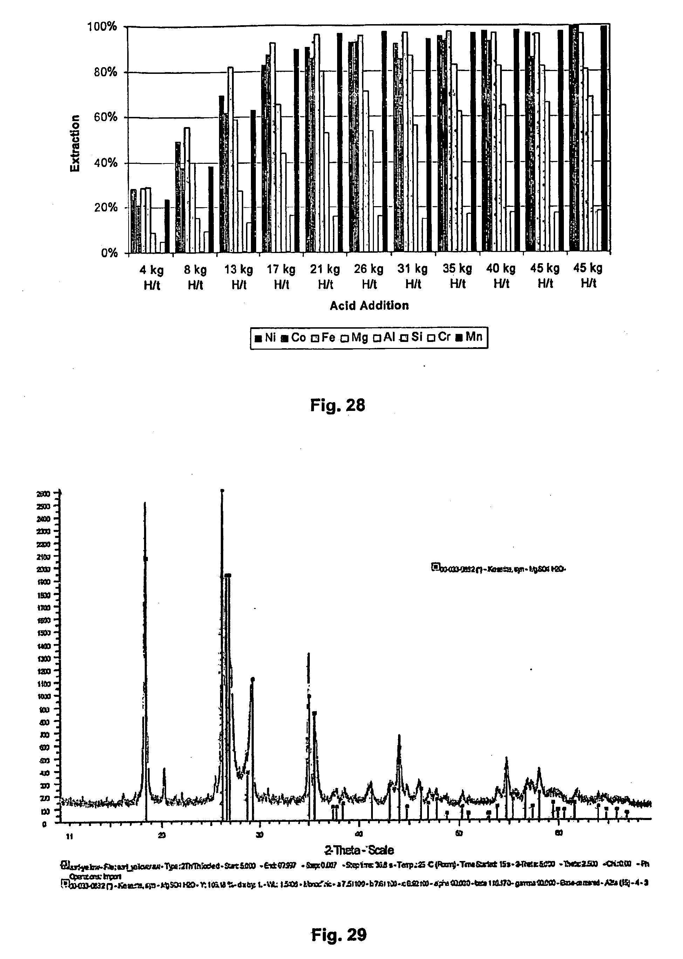

Table 3 represent the solids formed during crystallisation for the final cycle of two lock-cycle tests, conducted at 85°C and 105°C, respectively. Both produced high magnesium salts with magnesium-sulphate molar ratios close to one. XRD results (see Figure 29) indicated that the salt precipitated at the higher temperature consisted exclusively of kieserite (MgSO₄.H₂O).

**Table 3: Composition of solids formed in crystalliser**

| | **Mg** | **Fe** | **Ni** | **Cl** | **SO₄** | **H₂O*** | **Mg:SO₄** | **Mg:H₂O** |
|---|---|---|---|---|---|---|---|---|
| 85°C | 16.5% | 0.30% | 0.22% | 0.54 % | 64.4% | 18.0% | 1:0.99 | 1:1:5 |
| 110°C | 16.4% | 0.27% | 0.08% | 1.94% | 67.0% | 14.3% | 1:1.03 | 1:1.2 |

| | | | | | | | | |
|---|---|---|---|---|---|---|---|---|
| **Unaccounted weight is assumed to be water.* | | | | | | | | |

### 4. Tests with direct usage of sulphur dioxide in place of sulphuric acid (not in accordance with the present invention)

The following strategy describes how sulphur dioxide may be directly used to regenerate hydrochloric acid in the mixed chloride/sulphate system, using the resulting solution to leach valuable metals from oxide or sulphide ores.

First of all, iron in the ferric (3+) state is required to act as carrier/sorbent for the sulphur dioxide gas during the acid regeneration step. The bulk of the iron may enter the solution in the ferric state during the leaching of the ore, as is the case for example when leaching oxide ores such as Ni limonites. However, if the bulk of the iron enters the solution in the ferrous (2+) state, an oxidant (like oxygen) would be required to first oxidise the ferrous iron to its ferric state.

2FeCl₂ + 2HCl + ½O₂ → 2FeCl₃ + H₂O (5)

The acid regeneration step then follows, where the absorption of sulphur dioxide is accompanied by a release of sulphuric acid into solution:

2FeCl₃ + SO_{2(g)} + 2H₂O → 2FeCl₂ + H₂SO₄ + 2HCl (6)

In the mixed chloride/sulphate system, the difference in salt solubility between the major metal chloride and sulphate species are exploited to regenerate the hydrochloric acid equivalent, consumed during leaching. In the case of magnesium leached from lateritic oxide ores, the reaction is as follows:

MgCl₂ + H₂SO₄ + H₂O →MgSO₄.H₂O₍ₛ₎↓+ 2HCl (7)

The overall reaction during the acid regeneration step then becomes:

2FeCls + MgCl₂ + SO_{2(g)} + 3H₂O → 2FeCl₂ + MgSO₄.H₂O₍ₛ₎↓+ 4HCl (8)

Similar reactions can be written for other metal species, thus providing a recipe for replacing the equivalent amount of hydrochloric acid that was consumed during the leaching step. The precipitated salt (MgSO₄.H₂O in the above example) may be thermally decomposed to regenerate the equivalent amount of sulphur dioxide gas, thus making the whole process completely self sustainable. Alternatively, sulphur (or another cheap sulphur source) may be burned in air to produce sulphur dioxide gas that can be used directly as described above, without the need to first convert the gas into sulphuric acid in an expensive acid plant.

All the above reactions have been shown in the applicant's laboratory. However, with increased acidity, which may be a consequence of the continued reaction, the rate of Reaction 6 is expected to become slower. Commercially, a catalyst such as copper ion in solution, graphite or even coal may be used to accelerate Reaction 6.

A nickel bearing laterite sample was obtained from the Jacare deposit, Brazil. The material was found to have a certain magnesium content, which would be expected to consume a significant quantity of acid, when subjected to acid leaching. Consequently, a magnesium chloride brine was prepared, at a saturation level of 80%, at 80 °C. Other brine constituents were added, as per the predictions of mathematical process mass balance predictions. The laterite sample was pulped in this medium, and the acidity of the medium was made up to a pH of 0.5 by the addition of hydrochloric acid. Nickel and magnesium extractions from the laterite were well in excess of 80% within three hours residence time. The pregnant leach liquor was subjected to sparging with sulphur dioxide gas, which allowed the precipitation of at least as much magnesium as was leached from the laterite sample. The precipitate was found to be a crystalline magnesium sulphate monohydrate. Acid strength of the leach medium was simultaneously restored, allowing the leach of a subsequent sample.

The sulphate was calcined to form MgO, which is in excess to internal process requirements. Some of this MgO was used to precipitate iron, nickel and cobalt from the leach solution, as two separate hydroxide products, an iron products and a Ni/Co cake. The iron product was discarded, with the Ni/Co cake being the main process product.

Table 4 illustrates that sulphur dioxide gas can in principle be used to replace sulphuric acid in the crystallisation step; provided enough ferric ions are present and enough reaction time is allowed.

**Table 4: Replacement of sulphuric acid with sulphur dioxide**

| **Reagents** | **Reaction Time** | **Final Acid (HCl)** |
|---|---|---|
| 0% Sulphur dioxide gas + 100% Sulphuric acid | 2 hrs | 163 g/l |
| 25% Sulphur dioxide gas + 75% Sulphuric acid | 2.25 hrs | 159 g/l |
| 50% Sulphur dioxide gas + 50% Sulphuric acid | 4.5 hrs | 157 g/l |

The following conclusions may be drawn from the data presented here:
- The primary reagent (hydrochloric acid) could be maintained in the main cycle by precipitating Mg sulphate with concentrated sulphuric acid, resulting in the consistent extraction of Ni during the primary leaching step.
- The solubility of magnesium sulphate was lower in the crystalliser compared to leach, especially when operating at a higher temperature and Mg chloride concentration in the crystalliser.
- The crystals formed during crystallisation were magnesium sulphate mono-hydrate (kieserite), with some nickel and chloride inclusions. The chloride inclusion was likely due to solution entrapment in the fine precipitate, while nickel inclusion could be minimised by conducting the crystallisation at a higher temperature (just below the atmospheric boiling point of the solution);
- Sulphur dioxide gas may be used to systematically replace the equivalent amount of sulphuric acid, provided enough ferric ions are present to absorb the sulphur dioxide gas.

### Sulphide ores

The use of a hydrochloric acid (chloride) medium for the oxidative or non-oxidative leaching of sulphide concentrates, such as those of zinc, is described below according to a second embodiment of the invention. Although non-oxidative processes for the recovery of base metals from sulphide concentrates are not novel in-itself (sulphate medium: S-C Copper Process, Kawulka *et al*, 1978; chloride medium: Molleman et *al,* 1998), a process that regenerates acid is not known in the art. A non-oxidative leaching process in a high brine solution, in combination with an integrated acid regeneration step, is also not known in the art.

Valuable base metals, such as zinc, are leached from sulphide concentrates in a primarily hydrochloric acid medium. The base metal that is leached may ultimately be recovered in the form of saleable products. The leaching kinetics is fast and metals, like copper is easily rejected in the solid phase (as a CuₓS) and can be recovered from the tailings, if warranted, by an oxidative leaching process. An added advantage of operating under non-oxidative conditions is that elemental sulphur may be recovered via the conventional and well established Claus process (oil/petrochemical industry).

The main leaching agent is hydronium ion in a background of chloride, as dictated by the intrinsic build-up of salts, particularly base metal, such as zinc chloride, in the primary circuit.

A crystallisation step utilises the low solubility product of base metal sulphate or sulphite, such as those of zinc, against a chloride brine background, to remove leached values from the solution. The sulphate or sulphite crystals have low waters of hydration and are suitable for thermal decomposition to produce an oxide (to be used as an internal neutralising agent) that can either be sold directly or of which a proportion can be re-dissolved in sulphuric acid solution (produced in electrowinning) which is then used to directly electrowin metal.

The regeneration of hydrochloric acid and recovery of a base metal, such as zinc, as described above, is not associated with excessive water removal by evaporation, since the metal is recovered from a crystallised cake with low water content and low waters of crystallisation.

The invention relies on the significant difference of zinc solubility in the sulphate and chloride systems, with the latter almost twice as high at 100°C (see experimental data published in Linke and Seidell, 1965). In addition, when working in a chloride medium, it was found by the inventors that this phenomenon can be enhanced and exploited to dramatically reduce zinc solubility in chloride medium, when adding a sulphate or sulphite, either via a SO₂ gas or as sulphuric acid as intermediate recyclable reagents, thereby forming and precipitating a zinc sulphate or sulphite salt, while regenerating hydrochloric acid in solution. Furthermore, the experimental results obtained show that gunningite (the zinc sulphate monohydrate) is the preferred crystallisation product over a wide range of temperatures (typically -60°C) , which further minimizes the energy required for calcination to form ZnO (partly recycled as an in-process recycling neutralising agent) and regenerate sulphur dioxide. The simplified reaction may be written as follows:

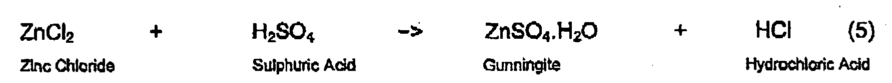

A crystalline product with a content of less than 0.01% total chloride was produced by the applicant in this manner, illustrating the potential of this technology, i.e. to generate high purity ZnO for sale (a proportional amount is used as an internal neutralising agent) or to re-dissolve the ZnO in sulphuric acid solution (returning from electrowinning) and directly electrowinning Zn metal from the resulting solution. In addition, relatively expensive hydrochloric acid is regenerated, using a relatively cheap and readily available reagent, i.e. sulphuric acid. In connection with the calcining of the precipitated zinc sulphate product, it should be an ideal product for decomposition in a fluidised-bed reactor. Partial re-hydration of the mono hydrate (to produce an optimised hydrate for thermal decomposition) may be easily achieved by controlling the contact time of the crystallised precipitation product with suitable water based liquor. If the direct use of sulphur dioxide is found to be technically challenging, the technology of regenerating sulphuric acid from the sulphur dioxide, produced in the calcining of the sulphate salt, is well established and provides a means of precipitating gunningite which has been proven (experimentally) feasible. Either way, no make-up reagents are required since sulphur dioxide is a product of the thermal decomposition step. A major advantage of using a zinc sulphate salt with low waters of hydration for decomposition to zinc oxide is that significantly less energy would be used as compared to pyrohydrolysis of a zinc chloride solution.

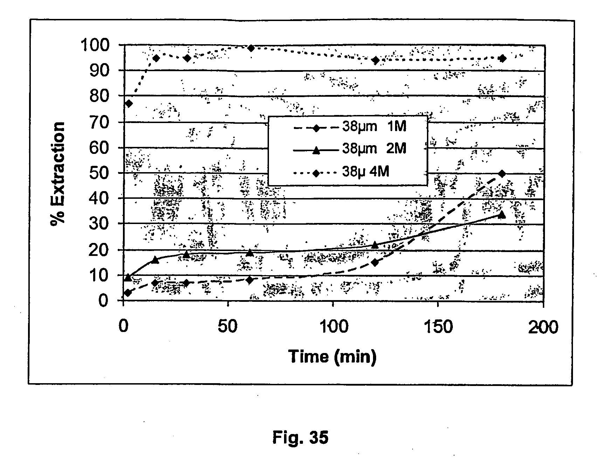

Favourable leaching kinetics were achieved on a bulk rougher concentrate indicating that this process is suitable for leaching value metals, such as zinc, silver and lead, from a sulphide source. Of particular interest was the fast (< 1 hr) kinetics of leaching at temperature of 85°C, in 4 molar hydrochloric acid solutions (Figure 35).

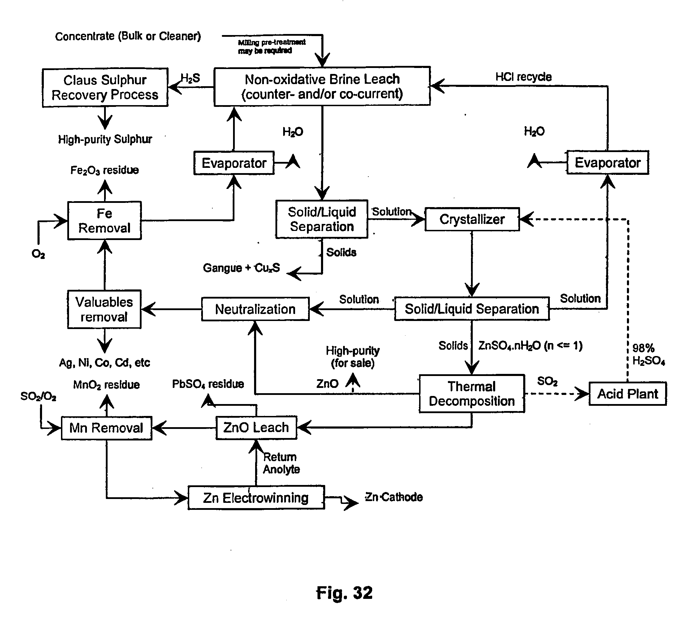

A conceptual flowsheet of the process is shown in Figure 32, wherein a hydrochloric acid leach medium is used to solubilise valuable zinc from a sulphide material in a non-oxidative step, and the zinc is then subsequently removed as a crystallised salt in an acid regeneration step. No neutralisation treatment of the pregnant leach liquor is necessary for the recovery of the zinc sulphate, which is recovered by addition of sulphuric acid. The sulphate precipitated is in the form of a monohydrate, rather than a hexahydrate (as a person skilled in the art would expect). This is particularly advantageous if the sulphate is to be converted to an oxide, as this entails a significant energy saving as compared to the hexahydrate. Impurities such as iron are removed by hydrolysis after neutralision of excess acid with recycled zinc oxide calcine.

A similar result could be achieved by direct addition of sulphur dioxide gas (instead of sulphuric acid), through sparging of the pregnant leach liquor. This could be advantageous in cases where elemental sulphur or a solid sulphate is roasted to produce sulphur dioxide, rather than purchasing ready made sulphuric acid.

The process is based on a novel reagent regeneration concept i.e. recycling of lixiviant and neutralising agent within the process. Preliminary mass/energy balancing has shown significant operating cost benefits of this approach over conventional processing of sulphide ores.

The following factors are of particular relevance:
- The concentrate may be a cleaner concentrate or, preferably, a bulk rougher concentrate (higher overall valuable recovery);
- The non-oxidative leach operates at any required HCl concentration, provided the total chloride can be maintained in the rest of the circuit;
- Cu re-precipitates as CuₓS in the atmospheric leach, i.e. can be recovered from the gangue residue if warranted;
- Pb leaches as chloride complexes from the circuit and would probably precipitate in the crystalliser as a sulphate salt. The PbO formed in the thermal composition step is then easily recoverable from the residue of the ZnO re-leach step as pure PbSO₄ salt;
- ZnSO₄.H₂O salt is formed in the crystalliser when H₂SO₄ is added to the chloride solution, utilising the benefit of a difference in sulphate and chloride salt solubilities: ZnCl₂ + H₂SO₄ + H₂O → ZnSO₄.H₂O + 2HCl The major advantage of performing this reaction, is that the background brine is intrinsically binding free water thus forming dehydrated salts (<=1 mol H₂O per mol Zn) which requires significantly less energy to decompose compared to highly hydrated salts like ZnSO₄.6H₂O;
- The direct use of SO₂ (formed in the thermal decomposition step) as primary reagent which does not form part of the invention, to precipitate ZnSO₄.H₂O has been shown viable, provided enough iron is present in the ferric state in order to absorb the SO₂ in the solution phase. This would require an oxidant (such as oxygen in air) being added to convert the ferrous iron (from the non-oxidative leach) to the ferric ion, prior to crystallization;
- The above crystallisation and thermal decomposition steps are in stoichiometric balance and no make-up H₂SO₄ is required (except for real plant controlling purposes);
- A proportion of the brine solution is bled from the main circuit (prior to crystallisation), to restrict the build-up of Fe in the primary circuit. A proportional amount of ZnO (produced in the thermal decomposition step) is circulated to neutralise the free acid in the impurity bleed solution, thus allowing cementation of valuables (Ag, Ni, Co, Cd) with zinc dust, prior to Fe removal;
- Fe hydrolysis is conducted either atmospherically or at low pressure in an autoclave to form hematite and/or goethite (probably as akaganite). Another advantage of operating in high brine solution is that the very little free water is contained and this, in turn, allows dehydrate Fe oxides/hydroxides to precipitate hematite at significant lower temperatures than would have been the case in conventional sulphate systems;
- The bulk of the ZnO (minus the bleed to neutralisation) proceeds to a re-leach step where oxide is dissolved with H₂SO₄ in the returning anolyte from electrowinning. Once again, the acid is in stoichiometric balance and no make-up acid, nor neutralizing agent are required (except for real-plant controlling purposes);
- Over the complete circuit, there is no/little need to bleed solution since Na₂SO₄ will build up to saturation and precipitate at the most concentrated point in the circuit;
- Since no/very little bleed is required, water removal is achieved with a multiple-effect evaporator;

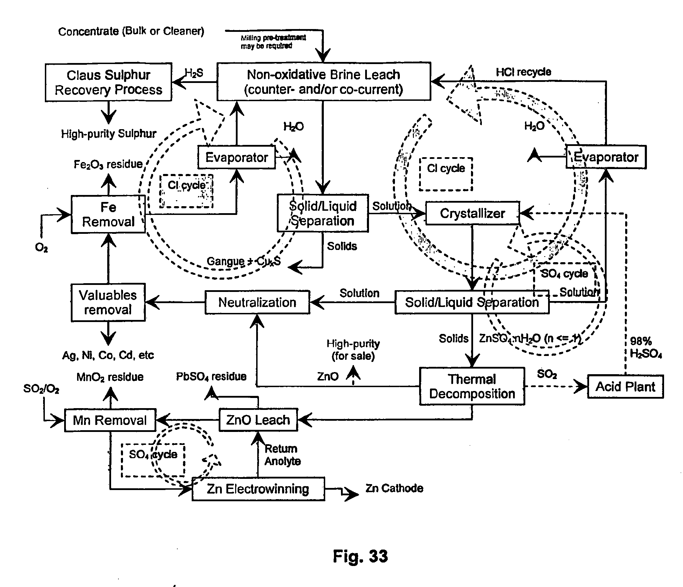

- Figure 33 illustrates the chloride and sulphate flow loops in the integrated flowsheet.

### Metallurgical Assessment

The laboratory simulation consisted of four processing steps, i.e. leaching, crystallisation, thermal decomposition and re-leaching of ZnO calcine. The deportment of the following elements was followed through the circuit (limited by the lower detection limit of 10 ppm):
Aluminium, Calcium, Cadmium, Cobalt, Chrome, Copper, Iron, Magnesium, Manganese, Nickel, Lead, Silicone, Zinc

The test conditions were based on the preliminary mass/energy balance simulation. One significant difference between the computer and the test simulations was the fact that the computer simulation was conducted on a cleaner concentrate (∼50% Zn), while the laboratory simulation was conducted on a rougher concentrate (∼5% Zn).

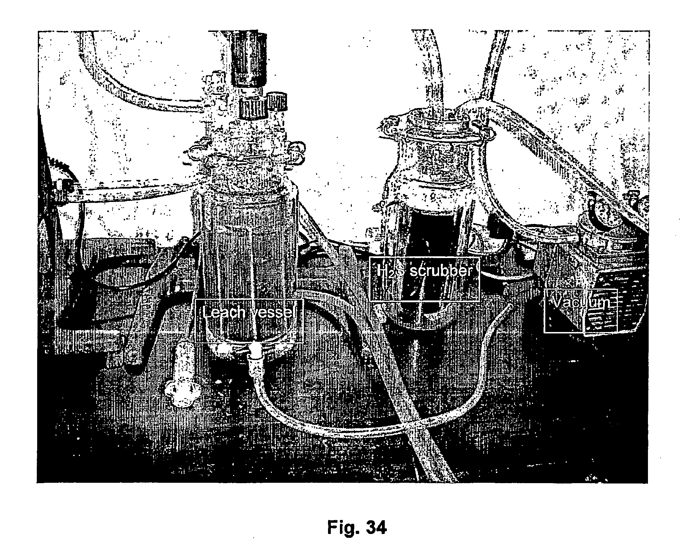

The metallurgical assessment in this early stage of research was only focussed on the non-oxidative atmospheric leaching and the crystalliser unit operations. The non-oxidative leaching setup is illustrated in Figure 34.

The vapour phase was trapped through a ferric sulphate scrubber in order to convert all the H₂S, formed in the leach, to elemental sulphur. A vacuum over the scrubber was found to be more functional than applying a positive pressure in the leaching vessel, i.e. to H₂S leakage to the laboratory environment. However, air was sparged through the leaching vessel in order to ensure the constant removal of H₂S from the system, i.e. to drive the reaction to the right hand side:

ZnS + 2H⁺ ⇔ Zn²⁺ + H₂S

Figure 35 illustrates typical leaching kinetics of tests conducted at low solids densities on a selected (fine particle removed) size fraction. The kinetics of the 4M HCl showed particular promise. The inhibition periods for the other two tests was due to the polarisation of the surface in an anodic direction, i.e. due to the presence of O₂ (sparged). Sparging of air into the solution was subsequently stopped.

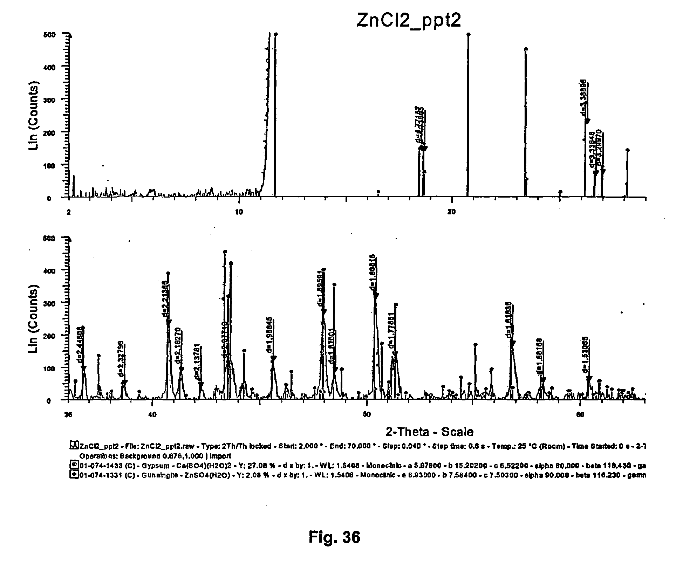

The major advantage of the crystallisation (of ZnSO₄.H₂O) scheme, is that no post-leach neutralisation is required, thus the leach can be operated at any desired concentration of HCl, i.e. to achieve fast kinetics. Figure 36 illustrate a typical crystallisation product from brine solution with concentrated H₂SO₄. The major portion of the mass was accounted for by gunningite [Zn(SO4)(H2O)], but the very high crystalline nature of gypsum predominates the XRD. In cases with very high concentration of NaCl, minor amounts of changoite [Na2Zn(SO4)2.4H2O] also precipitated.

To avoid interference from other elements in the crystallisation step, the solution concentrations are maintained below their sulphate or sulphite solubilities. This is achieved by treating a bleed stream, e.g. from the pregnant leach liquor, by cementation and/or neutralisation. A portion of the calcine may be used to effect this neutralisation.

The water balance of the process is maintained by evaporation, to control brine strength, compensating for various water inputs, such as with the leach feed, wash waters, and so forth.

### Leaching of a sulphide ore

The process will now further be explained by using the example of a zinc sulphide process.

A sphalerite bearing flotation concentrate was used, prepared from ore from the Gamsberg deposit (South Africa). The concentrate was leached in 4N HCl, against a background of zinc chloride in solution, at 85 °C. The leach was found to be essentially complete within 15 to 30 minutes. The background concentration of zinc chloride and the ratio of concentrate to brine were selected so as to prepare a pregnant leach solution at 80% saturation of zinc, as the chloride. The leach liquor was contacted with 98% sulphuric acid in a stirred beaker, to precipitate an amount of zinc sulphate equivalent to the quantity of zinc leached. The precipitate was found to be a crystalline zinc, sulphate, with a calculated hemihydrate hydration state. The salt optionally may be calcined to oxide at a suitable temperature, e.g. 750°C, with air, so as to produce a gas phase with at least 20% SO₂, suitable for a sulphuric acid plant, or for direct re-use in crystallisation.

### Crystallisation

Synthetic head solution with zinc, ferrous, sodium as both chlorides and sulphates were prepared at 60°C to which stoichiometric amounts of sulphuric were added. The objectives of these tests were twofold: firstly to determine the solubilities of the main components in solution and secondly, to determine the amount and purity of crystals that can be formed through the addition of sulphuric acid. The results of these tests are summarised in Table 5.

**Table 5: Solubility and crystallisation results**

| **Test** | **Lixiviant** | | | | | **Crystals** | | | | |
|---|---|---|---|---|---|---|---|---|---|---|
| | **Zn g/l** | **Fe g/l** | **Na g/l** | **Cl g/l** | **SO₄ g/l** | **Zn** | **Fe** | **Na** | **Cl** | **SO₄** |
| 20050324D4 | 288 | 0 | 0 | 318 | 167 | 40% | 0% | 0% | 5% | 41% |
| 20050324D5 | 290 | 0 | 52 | 407 | 36 | 41% | 0% | 1% | 5% | 45% |
| 20050324D6 | 98 | 3.8 | 61 | 61 | 230 | - | - | - | - | - |
| 20050324D7 | 320 | 6.3 | 23 | 373 | 94 | 38% | 2.5% | 0.3% | 4% | 46% |

No crystals were formed in test 20050324D6 due to the low initial concentration of zinc. These results have shown that the concept of primary reagent regeneration by precipitation crystallisation is fundamentally sound in the Zn system.

### Preparation of high acid strength chloride brine:(superacid)

A chloride brine can be contacted with sulphuric acid or sulphur dioxide so as to produce a hydrochloric acid brine of a superazeotropic concentration (i.e. where the resultant hydrochloric acid strength exceeds the azeotrope). No sophisticated distillation techniques or expensive reagents are required in the process. This provides a simple and cheap manner for the production of liquors with very high acidities, for subsequent use in certain processes, such as specialty dissolution processes commonly used in platinum group metals refining practice.

The acid strength which can be achieved, be this under or over the azeotrope, is governed by the chloride selected.

### Preparation of high acid strength chloride brine

At 100°C, magnesium chloride is soluble to the extent of ca. 42.3g/100g saturated solution. When adding H₂SO₄, in the extreme case of full magnesium precipitation as the monohydrate, ca. 50.3 g of salt is formed, leaving 49.7g water and 32.4g HCl; with an acid strength of 39%.

### Preparation of high acid strength chloride brine

At 80°C, zinc chloride is soluble to the extent of ca. 84.4g/100g saturated solution. When adding H₂SO4 in the case of 75% zinc precipitation as the monohydrate, ca. 71.7 g of salt is formed, leaving 28.3g water and 33.9g HCl; with an acid strength of 54%.

While the invention has been described in detail with respect to specific embodiments thereof, it will be appreciated by those skilled in the art that various alterations, modifications and other changes may be made to the invention without departing from the spirit and scope of the present invention.

While the invention has been described in detail with respect to specific embodiments thereof, it will be appreciated by those skilled in the art that various alterations, modifications and other changes may be made to the invention without departing from the spirit and scope of the present invention. It is therefore intended that the claims cover or encompass all such modifications, alterations and/or changes.

### REFERENCES

Rice, N.M. The Hydrochloric Acid Route for Nickel Laterites: A Brief History of an ongoing Project, Leeds University Mining Association Journal, pp.59-89, 1989.
Rice, N.M. and Strong, L.W. The leaching of lateritic nickel ores in hydrochloric acid, Canadian Metallurgical Quarterly, Vol.13, No.3, pp.485-493, 1974.
Dalvi, A.D., Gordon, W. and Osborne, R.C. The past and the future of nickel laterites, IN: TMS 2004-133rd Annual Meeting & Exhibition Proceedings, Charlotte, N. Carolina, March 14-18, 2004.
Monhemius, A.J., Treatment of lateritic ores of nickel to produce ferronickel, matte or precipitated sulphide, IN: Extractive Metallurgy of Nickel, Critical Reports on Applied Chemistry Vol. 17, ed. Burkin, A.R., John Wiley & Sons, pp.51-75, 1987.
Elias, M. Nickel laterite deposits - geological overview, resources and exploitation, IN: Giant Ore Deposits: Characterisitics, Genesis and Exploration, eds. Cooke, D.R. and Pongratz, J., Special Publication, Centre of Ore Deposit Research, University of Tasmania, pp.205-220, 2002.
Hatch Feasibility Study, *Fenix Preliminary Assessment,* Rev. 0, February 2005.
Bates, R.G., Staples, B.R. and Robinson, R.A. Ionic hydration and single ion activities in unassociated chlorides at high ionic strengths, Analytical Chemistry, Vol. 42, No. 8, pp. 867-871, 1970.
Jansz, J.J.C. (1983) Estimation of ionic activities in chloride systems at ambient and elevated temperatures, Hydrometallurgy, Vol. 11, pp. 13-31.
Steinbach, W. and Baerhold, P. Comparison of spray roasting and fluidised bed granulation for the recovery of hydrochloric acid from metallurgical processes through pyrohydrolysis, IN: Chloride Metallurgy 2002, Metallurgical Society of Canada, 52nd Annual Hydrometallurgy Meeting, Eds. E. Peck and G. Van Weert, Metallurgical Society of Canada, pp. 643-655, 2002.
Adham, K and Lee, C. Energy recovery in the metal chloride pyrohydrolysers, IN: Chloride Metallurgy 2002, Metallurgical Society of Canada, 52nd Annual Hydrometallurgy Meeting, Eds. E. Peck and G. Van Weert, Metallurgical Society of Canada, pp. 657-671, 2002.
Moyes, J., Houllis, F., Tong, A. and Sammut, D. The Intec Nickel Laterite Process, IN: ALTA 2005 Nickel/Cobalt Conference Proceedings (ref. Presentation), Perth, Australia, May 16-18, 2005.
HSC Chemistry 5.1, Chemical Reaction and Equilibrium Software with Thermochemical Database, Outokumpu Research, Finland.
Linke, W.F. and Seidell, A. Solubilities of Inorganic and Metal Organic Compounds, 4th ed., Amer. Chem. Soc., Vol. 1 and 2, 1965.
Riveros, P.A. and Dutrizac, J.E. The precipitation of hematite from ferric chloride media, Hydrometallurgy, Vol.46, pp.85-104, 1997.
Kawulka, P., Kirby, C.R. and Bolton, G.K. Sherrit-Cominco Copper Process, CIM Bulletin, February, 1978.
Molleman, E., Van Sandwijk, T. and Van Weert, G. Acid dissolution of iron-bearing zinc concentrates, Minerals & Metallurgical Processing, Vol.15, No.3, 1998

## Claims

1. A process for leaching a value metal from an ore containing said value metal, the process including the steps of:
leaching the ore in the presence of hydrochloric acid so as to form a soluble metal-chloride salt in a leach solution;
adding sulphuric acid to the leach solution to form a solid metal-sulphate salt, wherein the source of the metal in the metal-sulphate salt is predominantly from the ore;
regenerating hydrochloric acid simultaneously with the precipitation of the solid metal-sulphate salt; and
recovering the solid metal-sulphate salt from the leach solution;
wherein the value metal is selected from the group consisting of Zn, Cu, Ti, Al, Cr, Ni, Co, Mn, Fe; Pb, Na, K, Ca, Ag, platinum group metals and gold.

2. A process according to claim 1, wherein the metal-sulphate salt has the formula MeSO_{4.}yH₂O, where:
Me is a metal; and
y is 0 or greater.

3. A process according to claim 2, wherein y is from 0 to 3.

4. A process according to claim 2, wherein y is 0.

5. A process according to claim 2, wherein y is 1.

6. A process according to any one of the preceding claims, wherein the ore is an essentially oxidic or silicaceous base metal ore.

7. A process according to claim 6, wherein the ore is a zinc oxide ore.

8. A process according to any one of claims 1 to 5, wherein the ore is a lateritic nickel ore.

9. A process according to claim 8, wherein the lateritic ore is a saprolitic or limonitic ore.

10. A process according to any one of claims 1 to 5, wherein the ore is a sulphide ore.

11. A process according to any one of claims 1 to 5, wherein the ore is a titanium ore.

12. A process according to any one of claims 1 to 5, wherein the ore is an aluminium ore.

13. A process according to any one of the preceding claims, wherein the metal-sulphate salt is precipitated out of the leach solution.

14. A process according to any one of claims 1 to 12, wherein the metal-sulphate salt is recovered from the leach solution by evaporative crystallisation.

15. A process according to any of the preceding claims, wherein the metal in the metal-sulphate salt is magnesium.

16. A process according to any one of the preceding claims, wherein the metal-sulphate salt is treated so as to release sulphur dioxide, sulphur trioxide or a mixture thereof.

17. A process according to any one of the preceding claims, wherein the value metal is recovered independently of the metal salt formed by the addition of sulphuric acid.

18. A process according to any one of the preceding claims, wherein the recovered hydrochloric acid is a super-azeotropic acid.

19. A process according to any one of the preceding claims, wherein the metal-chloride salt solution is an alkali solution.

20. A process according to any one of the preceding claims, wherein the metal-sulphate salt is an alkali metal-sulphate salt.

21. A process according to any one of the preceding claims, wherein the regenerated hydrochloric acid is recycled within the leach process.

22. A process according to any one of the preceding claims, wherein the hydrochloric acid used to leach the ore is part of a brine solution.

23. A process according to claim 22, wherein the brine solution is from about 10% to about 90% saturated magnesium chloride solution, from about 10% to about 90% saturated zinc chloride solution or from about 10% to about 90% saturated other metal chloride solution.

24. A process according to claim 22, wherein the brine solution is from about 25% to about 40% saturated magnesium chloride solution, an about 25% to about 40% saturated zinc chloride solution or an about 25% to about 40% saturated other metal chloride solution.

25. A process according to any one of the preceding claims, wherein the metal-sulphate salt is used to produce a metal oxide.

26. A process according to any one of the preceding claims, wherein the metal-sulphate salt is subjected to thermal decomposition to produce a metal oxide and sulphur dioxide, sulphur trioxide or a mixture thereof.

27. A process according to either of claims 25 or 26, wherein the metal oxide is selected from magnesium oxide, zinc oxide, iron oxide and aluminium oxide.

28. A process according to claim 26, wherein the sulphur dioxide, sulphur trioxide or mixture thereof is used to produce sulphuric acid, which in turn is returned to the leach process to regenerate hydrochloric acid.

29. A process according to any one of the preceding claims, wherein the metal is leached from the ore at a temperature from room temperature to the boiling point of the metal-chloride salt leach solution.

30. A process according to any one of the preceding claims, wherein one or more metals are selectively separated from the solution prior to the formation of the metal-sulphate salt.

31. A process according to claim 30, wherein the selectively separated metals are cobalt, nickel, platinum group metals, gold, silver and/or copper.

32. A process according to any one of the preceding claims, wherein iron and/or other residual impurities resulting from the solubilisation of the ore are partially or completely removed from the leach solution.

33. A process according to claim 32, wherein the iron and/or other residual impurities are removed by solvent extraction, followed by pyrohydrolysis.

34. A process according to claim 32, wherein the iron and/or other residual impurities are removed by hydrolysis.

35. A process according to any one of the preceding claims, wherein the sulphuric acid has a concentration of greater than 30%.

## Patentansprüche

1. Verfahren zum Auslaugen eines Wertmetalles aus einem Erz, das das Wertmetall enthält, wobei das Verfahren die folgenden Schritte umfasst:
Auslaugen des Erzes in der Gegenwart von Salzsäure, um so ein lösliches Metallchloridsalz in einer Auslauglösung zu bilden;
Zugeben von Schwefelsäure zu der Auslauglösung, um ein festes Metallsulfatsalz zu bilden, wobei die Quelle des Metalles in dem Metallsulfatsalz überwiegend aus dem Erz ist;
Regenerieren der Salzsäure gleichzeitig mit der Fällung des festen Metallsulfatsalzes; und
Gewinnen des festen Metallsulfatsalzes aus der Auslauglösung;
wobei das Wertmetall ausgewählt wird aus der Gruppe, bestehend aus Zn, Cu, Ti, Al, Cr, Ni, Co, Mn, Fe, Pb, Na, K, Ca, Ag, Metallen der Platingruppe und Gold.

2. Verfahren nach Anspruch 1, wobei das Metallsulfatsalz die Formel MeSO₄.yH₂O besitzt, worin:
Me ein Metall ist; und
y 0 oder größer ist.

3. Verfahren nach Anspruch 2, wobei y von 0 bis 3 beträgt.

4. Verfahren nach Anspruch 2, wobei y 0 beträgt.

5. Verfahren nach Anspruch 2, wobei y 1 beträgt.

6. Verfahren nach einem der vorhergehenden Ansprüche, wobei das Erz ein im wesentlichen oxidisches oder silicatisches Grundmetallerz ist.

7. Verfahren nach Anspruch 6, wobei das Erz ein Zinkoxiderz ist.

8. Verfahren nach einem der Ansprüche 1 bis 3, wobei das Erz ein lateritisches Nickelerz ist.

9. Verfahren nach Anspruch 8, wobei das lateritische Erz ein sapropelitisches oder limonitisches Erz ist.

10. Verfahren nach einem der Ansprüche 1 bis 5, wobei das Erz ein Sulfiderz ist.

11. Verfahren nach einem der Ansprüche 1 bis 5, wobei das Erz ein Titanerz ist.

12. Verfahren nach einem der Ansprüche 1 bis 5, wobei das Erz ein Aluminiumerz ist.

13. Verfahren nach einem der vorherigen Ansprüche, wobei das Metallsulfatsalz aus der Auslauglösung ausgefällt wird.

14. Verfahren nach einem der Ansprüche 1 bis 12, wobei das Metallsulfatsalz aus der Auslauglösung durch verdampfende Kristallisation gewonnen wird.

15. Verfahren nach einem der vorherigen Ansprüche, wobei das Metall in dem Metallsulfatsalz Magnesium ist.

16. Verfahren nach einem der vorherigen Ansprüche, wobei das Metallsulfatsalz so behandelt wird, dass es Schwefeldioxid, Schwefeltrioxid oder eine Mischung davon freisetzt.

17. Verfahren nach einem der vorherigen Ansprüchen, wobei das Wertmetall unabhängig von dem Metallsalz abgetrennt wird, das durch die Zugabe von Schwefelsäure gebildet wird.

18. Verfahren nach einem der vorherigen Ansprüche, wobei die zurückgewonnene Salzsäure eine super-azeotrope Säure ist.

19. Verfahren nach einem der vorherigen Ansprüche, wobei die Metallchloridsalzlösung eine Alkalilösung ist.

20. Verfahren nach einem der vorherigen Ansprüche, wobei das Metallsulfatsalz ein Alkalimetallsulfatsalz ist.

21. Verfahren nach einem der vorherigen Ansprüche, wobei die regenerierte Salzsäure innerhalb des Auslaugverfahrens wiederverwendet wird.

22. Verfahren nach einem der vorherigen Ansprüche, wobei die Salzsäure, die verwendet wird, um das Erz auszulaugen, Teil einer Salzlösung ist.

23. Verfahren nach Anspruch 22, wobei die Salzlösung eine von etwa 10% bis etwa 90% gesättigte Magnesiumchloridlösung, eine von etwa 10% bis etwa 90% gesättigte Zinkchloridlösung oder eine von etwa 10% bis etwa 90% gesättigte Lösung eines anderen Metallchlorids ist.

24. Verfahren nach Anspruch 22, wobei die Salzlösung eine von etwa 25% bis etwa 40% gesättigte Magnesiumchloridlösung, eine etwa 25% bis etwa 40% gesättigte Zinkchloridlösung oder eine etwa 25% bis etwa 40% gesättigte Lösung eines anderen Metallchlorids ist.

25. Verfahren nach einem der vorherigen Ansprüche, wobei das Metallsulfatsalz verwendet wird, um ein Metalloxid herzustellen.

26. Verfahren nach einem der vorherigen Ansprüche, wobei das Metallsulfatsalz einer thermischen Zersetzung unterzogen wird, um ein Metalloxid und Schwefeldioxid, Schwefeltrioxid oder eine Mischung davon herzustellen.

27. Verfahren nach einem der Ansprüche 25 oder 26, wobei das Metalloxid ausgewählt wird aus Magnesiumoxid, Zinkoxid, Eisenoxid und Aluminiumoxid.

28. Verfahren nach Anspruch 26, wobei das Schwefeldioxid, Schwefeltrioxid oder die Mischung davon verwendet wird, um Schwefelsäure herzustellen, welche dann wieder in das Auslaugeverfahren zurückgegeben wird, um die Salzsäure zu regenerieren.

29. Verfahren nach einem der vorherigen Ansprüche, wobei das Metall aus dem Erz bei einer Temperatur von Raumtemperatur bis zu dem Siedepunkt der Metallchloridsalz-Auslauglösung ausgelaugt wird.

30. Verfahren nach einem der vorherigen Ansprüche, wobei ein oder mehrere Metalle selektiv aus der Lösung vor der Bildung des Metallsulfatsalzes abgetrennt werden.

31. Verfahren nach Anspruch 30, wobei die selektiv abgetrennten Metalle Kobalt, Nickel, Metalle der Platingruppe, Gold, Silber und/oder Kupfer sind.

32. Verfahren nach einem der vorherigen Ansprüche, wobei Eisen und/oder andere restliche Verunreinigungen, die aus der Solubilisierung des Erzes resultieren, teilweise oder vollständig aus der Auslauglösung entfernt werden.

33. Verfahren nach Anspruch 32, wobei das Eisen und/oder die anderen restlichen Verunreinigungen durch LösungsmittelExtraktion, gefolgt von Pyrohydrolyse, entfernt werden.

34. Verfahren nach Anspruch 32, wobei das Eisen und/oder die anderen restlichen Verunreinigungen durch Hydrolyse entfernt werden.

35. Verfahren nach einem der vorherigen Ansprüche, wobei die Schwefelsäure eine Konzentration von größer als 30% besitzt.

## Revendications

1. Procédé de lixiviation d'un métal de valeur à partir d'un minerai contenant ledit métal de valeur, le procédé comprenant les étapes suivantes :
la lixiviation du minerai en présence d'acide chlorhydrique afin de former un sel de chlorure métallique soluble dans une solution de lixiviation ;
l'ajout d'acide sulfurique à la solution de lixiviation pour former un sel de sulfate métallique solide, dans lequel la source du métal dans le sel de sulfate métallique provient principalement du minerai ;
la régénération de l'acide chlorhydrique simultanément avec la précipitation du sel de sulfate métallique solide ; et
la récupération du sel de sulfate métallique solide à partir de la solution de lixiviation ;
dans lequel le métal de valeur est choisi dans le groupe constitué par Zn, Cu, Ti, Al, Cr, Ni, Co, Mn, Fe, Pb, Na, K, Ca, Ag, les métaux du groupe du platine et l'or.

2. Procédé selon la revendication 1, dans lequel le sel de sulfate métallique est de formule MeSO₄.yH₂O, où
Me est un métal ; et
y est supérieur ou égal à 0.

3. Procédé selon la revendication 2, dans lequel y est 0 à 3.

4. Procédé selon la revendication 2, dans lequel y est 0.

5. Procédé selon la revendication 2, dans lequel y est 1.

6. Procédé selon l'une quelconque des revendications précédentes, dans lequel le minerai est un minerai métallique à base d'oxyde ou de silice.

7. Procédé selon la revendication 6, dans lequel le minerai est un minerai d'oxyde de zinc.

8. Procédé selon l'une quelconque des revendications 1 à 5, dans lequel le minerai est un minerai de nickel latéritique.

9. Procédé selon la revendication 8, dans lequel le minerai latéritique est un minerai saprolitique ou limonitique.

10. Procédé selon l'une quelconque des revendications 1 à 5, dans lequel le minerai est un minerai de sulfure.

11. Procédé selon l'une quelconque des revendications 1 à 5, dans lequel le minerai est un minerai de titane.

12. Procédé selon l'une quelconque des revendications 1 à 5, dans lequel le minerai est un minerai d'aluminium.

13. Procédé selon l'une quelconque des revendications précédentes, dans lequel le sel de sulfate métallique est précipité dans la solution de lixiviation.

14. Procédé selon l'une quelconque des revendications 1 à 12, dans lequel le sel de sulfate métallique est récupéré de la solution de lixiviation par cristallisation évaporative.

15. Procédé selon l'une quelconque des revendications précédentes, dans lequel le métal dans le sel de sulfate métallique est le magnésium.

16. Procédé selon l'une quelconque des revendications précédentes, dans lequel le sel de sulfate métallique est traité afin de libérer du dioxyde de soufre, du trioxyde de soufre ou un mélange de ceux-ci.

17. Procédé selon l'une quelconque des revendications précédentes, dans lequel le métal de valeur est récupéré indépendamment du sel métallique formé par l'ajout de l'acide sulfurique.

18. Procédé selon l'une quelconque des revendications précédentes, dans lequel l'acide chlorhydrique récupéré est un acide super-azéotropique.

19. Procédé selon l'une quelconque des revendications précédentes, dans lequel la solution de sel de chlorure métallique est une solution alcaline.

20. Procédé selon l'une quelconque des revendications précédentes, dans lequel le sel de sulfate métallique est un sel de sulfate de métal alcalin.

21. Procédé selon l'une quelconque des revendications précédentes, dans lequel l'acide chlorhydrique régénéré est recyclé dans le procédé de lixiviation.

22. Procédé selon l'une quelconque des revendications précédentes, dans lequel l'acide chlorhydrique utilisé pour lixivier le minerai fait partie d'une solution de saumure.

23. Procédé selon la revendication 22, dans lequel la solution de saumure est composée d'environ 10 % à environ 90 % d'une solution saturée en chlorure de magnésium, d'environ 10 % à environ 90 % d'une solution saturée en chlorure de zinc ou d'environ 10 % à environ 90 % d'une solution saturée en chlorure d'un autre métal.

24. Procédé selon la revendication 22, dans lequel la solution de saumure est composée d'environ 25 % à environ 40 % d'une solution saturée en chlorure de magnésium, d'environ 25 % à environ 40 % d'une solution saturée en chlorure de zinc ou d'environ 25 % à environ 40 % d'une solution saturée en chlorure d'un autre métal.

25. Procédé selon l'une quelconque des revendications précédentes, dans lequel le sel de sulfate métallique est utilisé pour produire un oxyde métallique.

26. Procédé selon l'une quelconque des revendications précédentes, dans lequel le sel de sulfate métallique est soumis à une décomposition thermique pour produire un oxyde métallique et du dioxyde de soufre, du trioxyde de soufre ou un mélange de ceux-ci.

27. Procédé selon la revendication 25 ou 26, dans lequel l'oxyde métallique est choisi parmi l'oxyde de magnésium, l'oxyde de zinc, l'oxyde de fer et l'oxyde d'aluminium.

28. Procédé selon la revendication 26, dans lequel le dioxyde de soufre, le trioxyde de soufre ou leur mélange est utilisé pour produire de l'acide sulfurique, qui à son tour est renvoyé vers le procédé de lixiviation pour régénérer l'acide chlorhydrique.

29. Procédé selon l'une quelconque des revendications précédentes, dans lequel le métal est lixivié à partir du minerai à une température allant de la température ambiante jusqu'au point d'ébullition de la solution de lixiviation contenant un sel de chlorure métallique.

30. Procédé selon l'une quelconque des revendications précédentes, dans lequel un ou plusieurs métaux sont sélectivement séparés de la solution avant la formation du sel de sulfate métallique.

31. Procédé selon la revendication 30, dans lequel les métaux sélectivement séparés sont le cobalt, le nickel, les métaux du groupe du platine, l'or, l'argent et/ou le cuivre.

32. Procédé selon l'une quelconque des revendications précédentes, dans lequel le fer et/ou d'autres impuretés résiduelles résultant de la solubilisation du minerai sont partiellement ou totalement éliminées de la solution de lixiviation.

33. Procédé selon la revendication 32, dans lequel le fer et/ou les autres impuretés résiduelles sont éliminées par extraction par solvant qui est suivie d'une pyrohydrolyse.

34. Procédé selon la revendication 32, dans lequel le fer et/ou les autres impuretés résiduelles sont éliminées par hydrolyse.

35. Procédé selon l'une quelconque des revendications précédentes, dans lequel l'acide sulfurique possède une concentration supérieure à 30 %.
